(19) Europäisches Patentamt
European Patent Office
Office européen des brevets

(11) **EP 3 453 209 B1**

(12) **EUROPEAN PATENT SPECIFICATION**

(45) Date of publication and mention
of the grant of the patent:
**02.02.2022 Bulletin 2022/05**

(21) Application number: **16901114.5**

(22) Date of filing: **02.05.2016**

(51) International Patent Classification (IPC):
**H04W 72/04** $^{(2009.01)}$    **H04L 1/18** $^{(2006.01)}$

(52) Cooperative Patent Classification (CPC):
**H04L 5/0055; H04L 1/18; H04L 1/1861;**
**H04L 1/1864; H04L 5/0044;** H04L 5/0007

(86) International application number:
**PCT/SE2016/050385**

(87) International publication number:
**WO 2017/192070 (09.11.2017 Gazette 2017/45)**

(54) **NETWORK NODE, WIRELESS DEVICE AND METHODS FOR HANDLING RADIO RESOURCES**

NETZWERKKNOTEN, DRAHTLOSE VORRICHTUNG UND VERFAHREN ZUR HANDHABUNG VON FUNKRESSOURCEN

NOEUD DE RÉSEAU, DISPOSITIF SANS FIL ET PROCÉDÉS POUR GÉRER DES RESSOURCES RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.03.2019 Bulletin 2019/11**

(73) Proprietor: **Telefonaktiebolaget LM Ericsson (publ)**
**164 83 Stockholm (SE)**

(72) Inventors:
• **YILMAZ, Osman Nuri Can**
**02280 Espoo (FI)**
• **ERIKSSON, Erik**
**SE-585 93 Linköping (SE)**
• **HESSLER, Martin**
**SE-587 58 Linköping (SE)**
• **BRAHMI, Nadia**
**Hildesheim 31139 (DE)**

(74) Representative: **Zacco Sweden AB**
**Valhallavägen 117**
**Box 5581**
**114 85 Stockholm (SE)**

(56) References cited:
WO-A1-2011/009481      WO-A1-2014/189416
US-A1- 2010 284 364      US-A1- 2011 268 074

• **T. HOHNE ET AL.: 'Overhead of shared NACK feedback channels' INTERNATIONAL CONFERENCE ON TELECOMMUNICATIONS 2010, DOHA, pages 299 - 303, XP031685467**

**Description**

Technical field

The present disclosure relates generally to a network node, a wireless device and methods therein, the network node serving wireless devices in a radio network where feedback signaling is employed to indicate either an acknowledgement, ACK, or a non-acknowledgement, NACK, of correct reception of data transmitted by the wireless devices.

Background

For some years, different types of radio networks for wireless communication have been developed to provide radio access for various wireless terminals in different areas. The radio networks are constantly improved to provide better coverage and capacity to meet the demands from subscribers using increasingly advanced services and terminals, e.g. smartphones and tablets, which may require considerable amounts of bandwidth and resources for data transport in the networks. A limiting factor for capacity of a radio network is the amount of available radio resources, e.g. in terms of time, frequency bandwidth and transmit power, and the capacity of a radio network is improved by more efficient usage of such radio resources.

In the field of mobile or wireless communication, the term "wireless device" is often used and will be used in this disclosure to represent any communication entity capable of radio communication with a radio network by sending and receiving radio signals, such as e.g. mobile telephones, tablets and laptop computers. Another common term in this field is "User Equipment, UE", which may also be used to denote any communication entity capable of radio communication with a radio network by sending and receiving radio signals, such as e.g. mobile telephones, tablets and laptop computers. The terms UE and wireless device are thus interchangeable in this disclosure. A wireless device in this context could also be a machine-to-machine type of device operating automatically such as a sensor, counter or measuring entity which is configured to send reports over the radio network e.g. at certain intervals or upon certain events. Further, the term "network node", is used here to represent any node of a radio network that is arranged to communicate radio signals with wireless devices or UEs. The network node in this context is sometimes also referred to as a base station, radio node, e-NodeB, eNB, NB, base transceiver station, access point, etc.

It is becoming increasingly common to employ so-called "Machine-to-Machine", M2M, devices which are typically installed at certain locations to operate automatically by sending and receiving data according to a predefined behavior, also referred to as Machine Type Communication, MTC. M2M devices may thus alternatively be called MTC devices.

For example, equipment and procedures have been developed for monitoring various locations, areas and functions that need to be supervised, where M2M devices can be installed at different locations within a monitored area or at moving objects such as vehicles or machine parts, to perform some predefined operational task such as measuring, counting, detecting or sensing, and typically reporting the result to a central server or the like. Such M2M devices may be configured to measure or observe some metric or parameter of interest, such as temperature, pressure, voltage, battery level, light, motion, sound, presence of objects, presence of smoke, to mention a few illustrative examples.

The devices may use radio access over a radio network to report sensor data comprising information about their measurements and observations to the server, e.g. at regular intervals or triggered by occurrence of an event, e.g. detection of motion, sound, vibration, light, smoke, temperature rise, and so forth. The server may further send various commands and instructions back to the devices to control their operation.

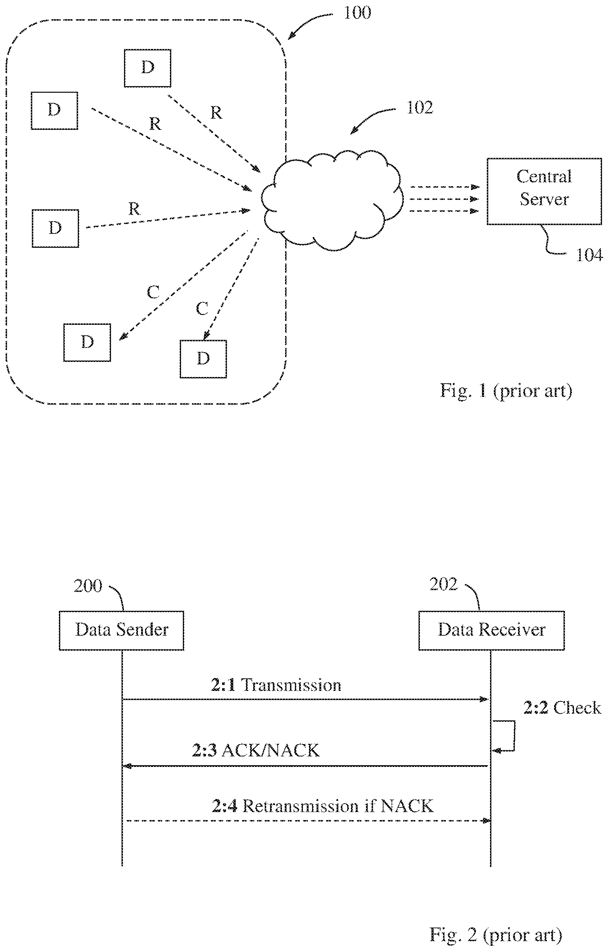

An example of an arrangement for monitoring a particular area, vehicle or machine is schematically illustrated in Fig. 1 where a plurality of M2M devices "D" are distributed at different locations within a schematically shown monitored area or object 100, the devices D being configured to perform various measurements and observations at their respective locations and to send reports over a radio network 102 to a central monitoring server 104, as indicated by arrows "R". The server 104 may also send various commands to control operation of the devices D, as indicated by opposite arrows "C".

As mentioned above, it is of interest for network operators to improve capacity in their networks by utilizing the available radio resources as efficiently as possible. It is often also necessary to ensure reliability when data is transmitted to or from the wireless devices, e.g. M2M devices, so that no errors occur in the information communicated, e.g. in case there are high demands on reliability in the communication . This can be achieved by adding extra control bits in the transmission which can be used for error correction and/or for checking that there is no error in the received data, e.g. after make an attempt at error correction. A common method for error detection is the well-known Cyclic Redundancy Check, CRC, where basically a sum of the transmitted data may be checked.

If a data receiving node determines, e.g. by using CRC or other error detecting method, that data has not been received correctly from a data sending node, it may send an error indicating message back to the data sending node which then may send the same, or at least corresponding, data once again to the data receiving node, referred to as retransmission. A commonly used process for enabling retransmissions of erroneously received data is the well-known Hybrid Automatic Repeat Request, HARQ, process. Retransmissions may be employed if it is important that the data is correct when received, such as in M2M reporting of measurements and observations. On the other hand, a certain amount of errors can normally be tolerated in speech or video data and retransmissions may in that case not be motivated.

The HARQ process or similar generally requires a node receiving data from another node to indicate whether a transmitted chunk of data has been properly received and decoded or not, by sending a feedback message to the data sending node, also referred to as "feedback signaling". In this context, the terms "forward link" and "data link" refer to a radio link used for conveying data while the terms "reverse link" and "feedback link" refer to a radio link used for conveying feedback messages.

Fig. 2 illustrates a simple example of how this is basically done. In a first **action 2:1**, a data sending node denoted data sender 200 transmits a piece of data, e.g. together with a CRC or similar, on a forward link to a data receiving node denoted data receiver 202. The data sender 200 may be a network node and the data receiver 202 may be a wireless device, or vice versa, and this procedure may be applied in either direction. Having received the data, the data receiver 202 checks if the data has any errors, e.g. by using the above-mentioned CRC for error detection, in another **action 2:2**. The data receiver 202 then returns a feedback message accordingly on a reverse link to data sender 200, in a next **action 2:3**.

The feedback message is either an acknowledgement, ACK, which confirms correct reception of the data, or a non-acknowledgement, NACK, which indicates an error in the received data or no reception at all, depending on the outcome of action 2:2 When receiving a NACK, the data sender 200 is required to retransmit the same chunk of data, as indicated by an optional **action 2:4**, to enable another attempt of reception and decoding at the data receiver 202. The HARQ process for feedback signaling is widely known as such in this field and it is not necessary to describe in any further detail to understand the following disclosure. It should be understood that a certain amount of radio resources must be allocated for enabling the above-described communication of feedback messages. Even though the indication of ACK or NACK as such requires only one bit, 1 or 0, for each feedback message, a considerable amount of overhead is needed apart from that bit to enable this process.

It is thus a problem that considerable amounts of radio resources may be spent to no avail regardless of whether a feedback procedure such as the above-described HARQ process is employed or not. For example, when a feedback procedure is employed, a certain amount of extra radio resources must be allocated on the reverse link which may be a waste of radio resources in case the radio conditions are good and there are virtually no errors in the data communication, still requiring the data receiver to keep sending the feedback messages.

On the other hand, if no feedback procedure is employed, thus not requiring any extra radio resources, it is necessary to ensure that no data errors occur for a data communication where the data receiving node may be very error-sensitive and require correct data reception. In this context, the term "error-sensitive" implies that the data receiving node has high requirements on the data reception and/or that an application that uses the communicated data requires that the data is correct.

Correct data reception may be achieved by using a relatively large amount of radio resources for the data transmission on the forward link, e.g. by employing added error correction bits and/or high transmit power, to ensure correct data reception even when the radio conditions are bad. In order to ensure this, the radio resources used for communicating data must be dimensioned for a "worst-case scenario", which may require something like 10 times more radio resources than what is normally needed for about, say, 99% of the time. Therefore, large amounts of radio resources will often be occupied to no avail here as well. It is thus a problem to increase efficiency by avoiding waste of radio resources in data communications between a network node and a wireless device, and at the same time achieve sufficient reliability in the data communications.

US 2010/0284364 A1 discloses a semi-persistent scheduling method and apparatus based on statistically multiplexing in time and frequency resources.

Summary

It is an object of embodiments described herein to address at least some of the problems and issues outlined above. It is possible to achieve this object and others by using a network node, a wireless device and methods therein as defined in the attached independent claims. The embodiments of the invention are those defined by the claims. Moreover, examples, aspects and embodiments, which are not covered by the claims are presented not as embodiments of the invention, but as background art or examples useful for understanding the invention.

According to one aspect, a method is performed by a network node serving wireless devices in a radio network where feedback signalling is employed to indicate either an acknowledgement, ACK, or a non-acknowledgement, NACK, of correct reception of data transmitted by the wireless devices. In this method, the network node assigns, prior to receiving a set of concurrent transmissions of data from a group of wireless devices served by the network node, a shared radio resource to the group of wireless devices to be used for retransmission in case the feedback signalling for at least one transmission of data out of the set of concurrent transmissions of data indicates a NACK. At some point, the network node receives the set of concurrent transmissions of data from the group of wireless devices wherein a subset of the concurrent transmissions of data is not received correctly.

The network node further transmits, as said feedback signalling, a NACK to those wireless devices in the group of wireless devices that transmitted the subset that was not received correctly. Accordingly, the network node then receives, on the shared radio resource, a retransmission of at least one of the concurrent transmissions of data in the subset that was not received correctly from at least one wireless device to which said NACK was transmitted.

According to another aspect, a network node is arranged to serve wireless devices in a radio network where feedback signalling is employed to indicate either an acknowledgement, ACK, or a non-acknowledgement, NACK, of correct reception of data transmitted by the wireless devices. The network node is configured to assign, prior to receiving a set of concurrent transmissions of data from a group of wireless devices served by the network node, a shared radio resource to the group of wireless devices to be used for retransmission in case the feedback signalling for at least one transmission of data out of the set of concurrent transmissions of data indicates a NACK.

The network node is also configured to receive the set of concurrent transmissions of data from the group of wireless devices wherein a subset of the concurrent transmissions of data is not received correctly, and further configured to transmit, as said feedback signalling, a NACK to those wireless devices in the group of wireless devices that transmitted the subset that was not received correctly. The network node is also configured to receive, on the shared radio resource, a retransmission of at least one of the concurrent transmissions of data in the subset that was not received correctly from at least one wireless device to which said NACK was transmitted.

According to another aspect, a method is performed by a wireless device when being served by a network node in a radio network where feedback signalling is employed to indicate either an acknowledgement, ACK, or a non-acknowledgement, NACK, of correct reception of data transmitted by the wireless device. In this method the wireless device obtains, prior to performing a transmission of data to the network node, information about a shared radio resource to be used for retransmission of the data in case the feedback signalling for the transmission of data indicates a NACK, the shared radio resource being assigned to a group of wireless devices comprising the wireless device.

The wireless device further performs the transmission of data to the network node and receives from the network node, as said feedback signalling, a NACK for the transmission of data. Then the wireless device performs a retransmission of the data on the shared radio resource to the network node.

According to another aspect, a wireless device is capable of being served by a network node in a radio network where feedback signalling is employed to indicate either an acknowledgement, ACK, or a non-acknowledgement, NACK, of correct reception of data transmitted by the wireless device. The wireless device is configured to obtain, prior to performing a transmission of data to the network node, information about a shared radio resource to be used for retransmission of the data in case the feedback signalling for the transmission of data indicates a NACK, the shared radio resource being assigned to a group of wireless devices comprising the wireless device.

The wireless device is also configured to perform transmission of data to the network node, and to receive from the network node as said feedback signalling, a NACK for the transmission of data. The wireless device is then further configured to perform a retransmission of the data on the shared radio resource to the network node.

The above methods, network node and wireless device may be configured and implemented according to different optional embodiments to accomplish further features and benefits, to be described below.

A computer program is also provided comprising instructions which, when executed on at least one processor, cause the at least one processor to carry out the above method. A carrier is also provided which contains the above computer program, wherein the carrier is one of an electronic signal, optical signal, radio signal, or a computer readable storage medium. The invention is defined by the a method performed by a network node and by the corresponding network node, as defined in claims 1 and 2. Further the invention is defined by a method performed by a wireless device and by the corresponding wireless device as defined in claims 10 and 11.

Brief description of drawings

The solution will now be described in more detail by means of exemplary embodiments and with reference to the accompanying drawings, in which:

Fig. 1 is a communication scenario illustrating that wireless MTC devices communicate with a central server, according to the prior art.
Fig. 2 is a signaling diagram illustrating a basic HARQ process, according to the prior art.
Fig. 3 is a flow chart illustrating a procedure in a network node, according to some possible embodiments.
Fig. 4 is a flow chart illustrating an example of how a network node may operate in more detail, according to further possible embodiments.
Fig. 5 is a diagram illustrating how a network node may communicate with six wireless devices, according to further possible embodiments.

Fig. 5A is a diagram illustrating assignment of radio resources to enable the retransmissions in Fig. 5, according to further possible embodiments.

Fig. 6 is a flow chart illustrating a procedure in a wireless device, according to further possible embodiments.

Fig. 7 is a block diagram illustrating a network node in more detail, according to further possible embodiments.

Fig. 8 is a block diagram illustrating a wireless device in more detail, according to further possible embodiments.

Fig. 9 is a diagram illustrating how error rate on a radio link is dependent on signal-to-noise ratio.

Fig. 10 is a diagram illustrating how the need for radio resources on a radio link is dependent on a desired signal-to-noise ratio.

Fig. 11 is a diagram illustrating how ACK to NACK probability is dependent on signal-to-noise ratio for an error rate of $10^{-4}$ and for an error rate of $10^{-9}$, respectively.

Fig. 12 is a diagram illustrating how different error rates can be achieved for different numbers of allowed retransmissions.

## Detailed description

In the following description, the error rate for reception of data on the forward link will be referred to as the "data error rate", and the error rate for reception of feedback messages on the reverse link will be referred to as the "feedback error rate".

The solution and its embodiments will be described in terms of functionality in a network node of a radio network when a plurality of wireless devices are being served by the network node for radio communication involving transmission of data from the wireless devices to be received by the network node. The embodiments herein also refer to functionality in a wireless device when being served by the network node. In this solution, it is assumed that feedback signalling is employed in the radio communication to indicate either an acknowledgement, ACK, or a non-acknowledgement, NACK, of correct reception of data transmitted by the wireless devices. As mentioned above, feedback signalling of an ACK indicates that the data has been correctly received whereas feedback signalling of a NACK indicates that the data has not been correctly received.

Briefly described, the amount of radio resources needed for feedback signalling to multiple wireless devices can be reduced by using the solution as described herein, as compared to conventional techniques. This is accomplished by assigning a shared radio resource to a group of wireless devices so that the shared radio resource can be used by any of the wireless devices for retransmission of data in case the feedback signalling indicates a NACK. This will occupy less radio resources than if each wireless device would be assigned its own radio resource for retransmissions.

For example, there may in many cases be only one, if any, wireless device that receives a NACK and needs to perform a retransmission on the shared radio resource and if so the shared radio resource will be sufficient for the retransmission, if any. One the other hand, if there are more than one wireless device that need to perform a retransmission on the shared radio resource, there is a risk that the retransmissions interfere with one another. Some embodiments that can be used to avoid such interference on the shared radio resource will be described later below.

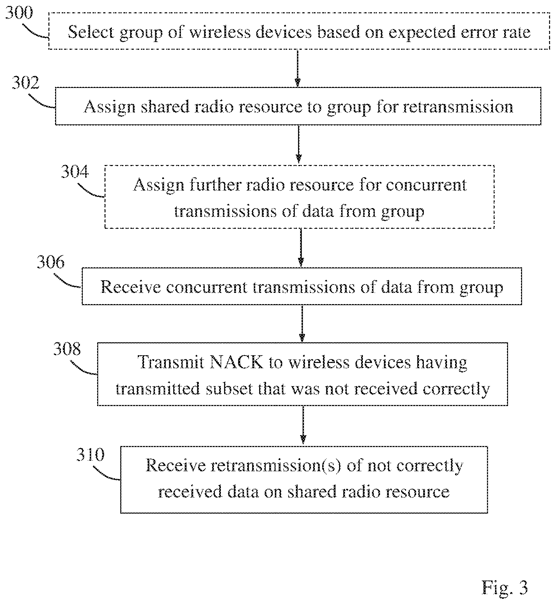

An example of how the solution may be employed will now be described with reference to the flow chart in Fig. 3 which illustrates a procedure with actions performed by a network node when serving wireless devices in a radio network where feedback signalling is employed to indicate either an ACK or a NACK of correct reception of data transmitted by the wireless devices. An initial and optional **action 300** illustrates one example embodiment where the network node may select a group of wireless devices being served by the network node, based on an expected error rate for transmission and/or retransmission of data from the respective wireless devices. This embodiment may be used such that a wireless device is included in the group if its expected error rate in data transmission is below a preset threshold, which implies that the amount of expected retransmissions from this wireless device is limited.

In another example embodiment, the group of wireless devices may be selected further based on an expected error rate for the feedback signalling to the respective wireless devices. In this embodiment, a wireless device may be included in the group if its expected error rate for feedback signalling is below another preset threshold, which implies that the feedback signalling to this wireless device is likely to succeed. The above two embodiments may be used alone or combined, e.g. such that both of the above-mentioned threshold conditions must be fulfilled to include a wireless device in the group, or it may be sufficient that only one of the two threshold conditions is fulfilled.

In the above embodiments, the expected error rate for data transmission from a wireless device and feedback transmission to the device may be estimated based on quality or path gain of the radio links used for transmission of data and feedback, respectively. Thus, if the radio link in question is considered to be "good", e.g. when the expected error rate is below some predefined threshold, it may be decided to include the wireless device in the group which will be handled according to the following actions in the procedure of Fig. 3. Hence, the wireless devices included in the group are expected to have a low or limited error probability and corresponding limited need for retransmissions. As a result, no more than a few of the devices, if any, in the group are likely to need to retransmit any data.

In this procedure, the network node assigns, prior to receiving a set of concurrent transmissions of data from a group of wireless devices served by the network node, a shared radio resource to the group of wireless devices to be used for retransmission in case the feedback signalling for at least one transmission of data out of the set of concurrent transmissions of data indicates a NACK. This assigning is illustrated by an **action 302,** and it may be done for the group of wireless devices selected in action 300. By assigning a shared radio resource to multiple wireless devices, the capacity of the radio network can be utilized more efficiently as compared to assigning multiple individual radio resources to the respective wireless devices.

A next optional **action 304** illustrates another example embodiment. In this embodiment, the network node may assign, prior to receiving initial transmissions of data for which a unique radio resource is assigned to each individual wireless device in the group, a further radio resource for the set of concurrent transmissions of data, wherein a smaller amount of resources are assigned as the shared radio resource for the retransmission as compared to an amount of resources assigned as the further radio resource.. The term "unique" implies that each unique radio resource is assigned to only one wireless device and is not shared with any other wireless device. Thereby, the wireless devices can transmit data on their respective unique radio resources without interference from one another which may reduce the risk for unsuccessful reception of initial data transmissions.

The "further radio resource" for the set of concurrent transmissions of data referred to in action 302 above is thus assigned prior to reception of the initial transmissions of data, and the set of concurrent transmissions may include retransmission of the initial transmission. Furthermore, the above-mentioned "set of concurrent transmissions of data" may also include one or more retransmissions of previously transmitted data for which a NACK is generated, and these already made retransmissions may be selected for another retransmission on the "further radio resource" of this embodiment.

A further **action 306** illustrates that the network node receives the above-mentioned set of concurrent transmissions of data from the group of wireless devices wherein a subset of the concurrent transmissions of data is not received correctly. This means that each transmission in the subset needs to be performed again, i.e. the data needs to be retransmitted on the shared radio resource. In a next **action 308,** the network node accordingly transmits, as said feedback signalling, a NACK to those wireless devices in the group of wireless devices that transmitted the subset that was not received correctly.

A final **action 310** illustrates that the network node receives, on the shared radio resource, a retransmission of at least one of the concurrent transmissions of data in the subset that was not received correctly from at least one wireless device to which said NACK was transmitted. It is thus an advantage of the solution described above by means of Fig. 3, that the consumption or usage of precious radio resources is reduced by assigning a shared radio resource to multiple wireless devices for retransmission, instead of assigning one unique radio resource to each and every wireless device for retransmission.

Some further non-limiting embodiments that may be employed in the above procedure will now be described.

In one example embodiment, the retransmission of data received on the shared radio resource may be contention-based. This means that if there are more than one wireless device that needs to retransmit, the wireless devices will perform an opportunistic transmission with the risk of collision. Contention-based transmission is well-known as such and an example of how it may be employed in this context will be described later below.

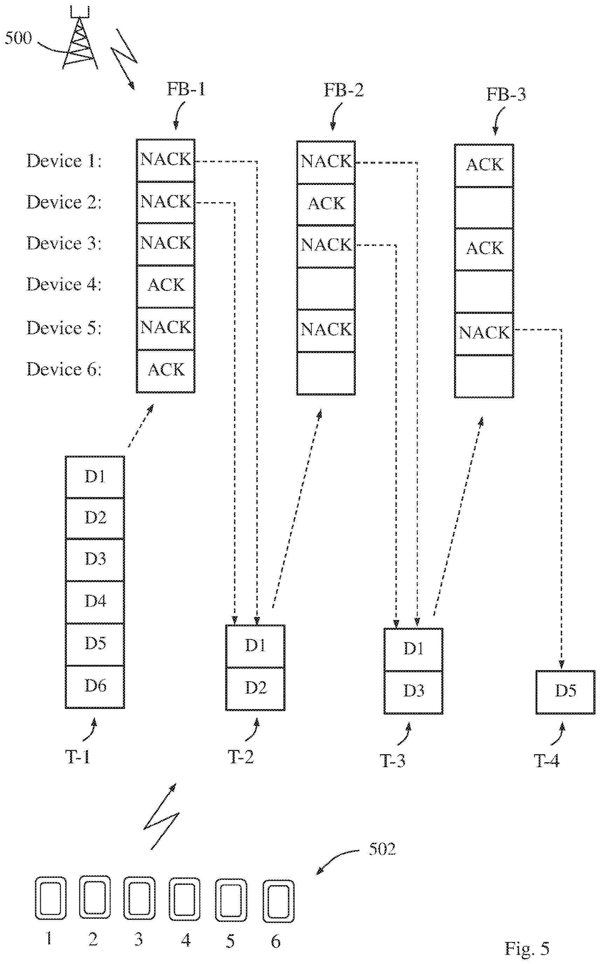

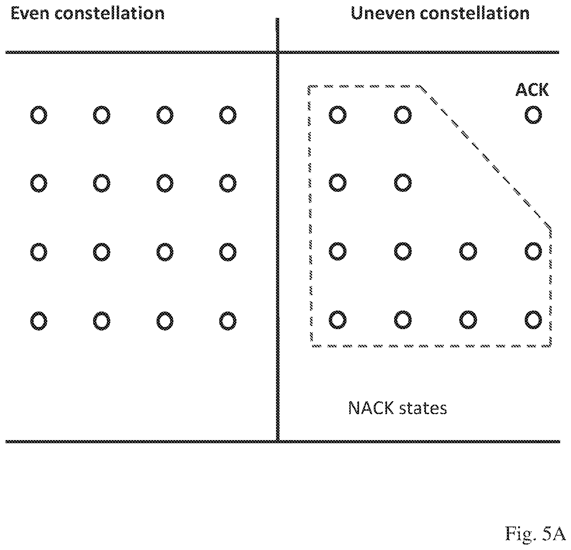

In another example embodiment, the network node may broadcast the feedback signalling and a priority level for each wireless device in the group, so that the wireless devices in the group for which the feedback signalling indicates a NACK are enabled to perform retransmission of the data on the shared radio resource depending on the priority levels. If this embodiment is used, another example embodiment may be that the priority levels indicate that a wireless device having higher priority than another wireless device can use the shared radio resource for retransmission, while the wireless device having lower priority can use the shared radio resource for retransmission only if the shared radio resource is not used by the wireless device having higher priority. An example of how such priority levels may be employed to control the transmission behaviour of the wireless devices will be described later below with reference to Fig. 5.

In another example embodiment, the above priority levels may be determined for the wireless devices in the group based on a likelihood of retransmission of previously transmitted data, so that a wireless device with relatively high likelihood of retransmission gets a higher priority level than a wireless device with relatively low likelihood of retransmission. In this embodiment, the wireless devices in the group are thus compared to each other with respect to their likelihood of retransmission, such that a wireless device with a higher likelihood of retransmission than another wireless device gets a higher priority level than the other wireless device. This way the wireless devices can be "ranked" relative one another and prioritized according to their likelihood of retransmission. In other words, with knowledge of the likelihood of retransmission it is possible to classify or "rank" the wireless devices in terms of priority levels. The likelihood of retransmission is basically dependent on the radio link used for data transmission. Another example embodiment is thus that the likelihood of retransmission may be determined for a wireless device based on quality or path gain of a radio link used by said wireless device for transmission of data. The likelihood of retransmission is also related to the expected data error rate such that a high expected data error rate implies a high likelihood of retransmission.

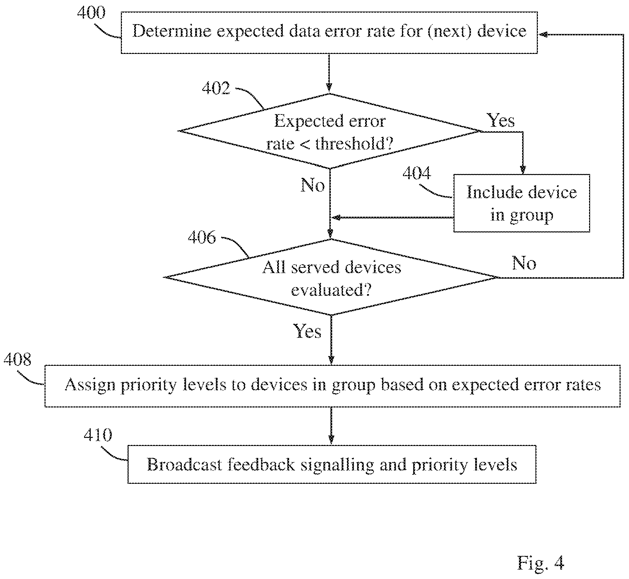

It was mentioned above that the group of wireless devices may be selected based on an expected error rate for data transmission and/or feedback signalling, referred to as data error rate and feedback error rate, respectively. An example of how this selection and a prioritization of wireless devices may be performed by the network node will now be described with reference to the flow chart in Fig. 4. This procedure may thus be performed in order to execute action 300 above, among other things.

In a first **action 400**, the network node determines the expected data error rate for a wireless device currently being served by the network node, e.g. based on quality or path gain of a radio link used by the wireless device. In a next **action 402**, the network node checks whether the expected data error rate is below a predefined threshold or not. If so, the wireless device is included in the group, as indicated by an **action 404**. If not, the wireless device is not included in the group by not performing action 404.After the check as of action 402 and possibly inclusion in the group as of action 404, the network node checks in an **action 406** whether all its served wireless devices have been evaluated.

If not all wireless devices have been evaluated in action 406, the network node returns to action 400 and determines the expected data error rate for a next wireless device. Thus, actions 400-406 are repeated for each additional wireless device that is evaluated in this manner so as to build the group of wireless devices for which the above-described procedure of Fig. 3 may be used. Once all served wireless devices have been evaluated in action 406, the network node assigns priority levels to the wireless devices in the group, as shown by another action **408**, which prioritization is based on the expected data error rates determined in action 400. The prioritization may also be dependent on other factors such as "importance" or service class of the devices, or similar.

In the example of Fig. 4, it may be assumed that the wireless devices are subject to the same service requirements, e g with respect to latency. Service requirements may also be referred to as Quality of Service, QoS, requirements. It is also conceivable that the wireless devices are subject to different service requirements and that the above prioritization may also be based on their respective service requirements. In some embodiments, the group of wireless devices may be formed so that the devices included in the group have same or similar/corresponding service requirements.

A final **action 410** illustrates that the network node broadcasts, or otherwise signals, the feedback signalling and priority levels for the wireless devices included in the group. This information may be provided to the devices by means of any explicit or implicit signalling, e.g. using unicast or broadcast. Thereby, the wireless devices in the group for which the feedback signalling indicates a NACK are enabled to perform retransmission of the data on the shared radio resource depending on the priority levels. Some examples of how such priority levels may be used to control usage of the shared radio resource have been described above. In one example, a wireless device having higher priority than another wireless device can use the shared radio resource for retransmission, while the wireless device having lower priority can use the shared radio resource for retransmission only if the shared radio resource is not used by the wireless device having higher priority.

In another example embodiment, the network node may assign different orthogonal codes corresponding to different spreading factors to the wireless devices in the group, depending on how many wireless devices, or what wireless devices, in the group have received a NACK as indicated by the broadcasted feedback signalling. This will thus enable the wireless devices to perform retransmissions with a spreading factor that depends on how many wireless devices, or what wireless devices, in the group, have received a NACK as indicated by the broadcasted feedback signalling. An example of how this embodiment may be employed will now be described.

In this example it is assumed that a set of shared radio resources to be used for retransmission are initially assigned to a group of wireless devices together with the initial transmission resources, and that each wireless device from the group should listen to the feedback of the initial transmission of the other wireless devices of the same group. Based on that information each device will estimate the number of wireless devices that need to perform a retransmission, that is, the number of wireless devices that have received a NACK. Each wireless device will then compute a corresponding spreading factor to share the retransmission resources with the other wireless devices needing retransmission.

It is assumed for instance that a group of 4 wireless devices was initially assigned each a unique resource for an initial transmission by assigning the resources using a spreading factor of 4 and in addition 3 shared resources (e.g. for using a spreading factor of 3) for retransmission, and that after the initial transmission having been performed by each wireless device, two wireless devices have already successfully met a predefined reliability requirement, e.g. related to their respective Bit Error Rate, BER. This means that the retransmission resources now need only to be shared by the two remaining wireless devices and hence a spreading factor of 2 can be used for the retransmission on the 3 shared resources instead of the initial spreading factor of 4, assuming that the wireless devices are multiplexed on the same resources using Code Division Multiple Access, CDMA.

By assigning the shared resource to the group of wireless devices such that it is dimensioned for retransmission by fewer devices than the number of devices performing a preceding transmission, such as the initial transmission in this example, radio resources can be freed up for other purposes. As the number of devices actually needing to perform a retransmission may, as in this example, still be smaller than the number of devices for which the retransmission resource is dimensioned, the resources used for the retransmission will be less susceptible to interference as compared to the resources used for the preceding transmission, such as the initial transmission in this example. By assigning the shared resource for retransmission prior to the transmission of the data, reduction of latency in correct reception of the data is enabled.

To implement the above-described behaviour, different orthogonal codes corresponding to different spreading factors may be initially assigned to the wireless devices in the group by a network controller or base station. The orthogonal codes can then be adaptively used based on the feedback collected after the preceding or initial transmission performed by each wireless device, i.e. depending on how many devices in the group need to perform a retransmission of the data..

In another example embodiment, multiple shared radio resources may be assigned for retransmission of data and the feedback signalling may in this case comprise multiple bits for indicating the shared radio resources. An example of how this embodiment may be employed will now be described.

In this example, each wireless device listens to its own feedback but it has multiple preconfigured possible retransmission resources, where the use of a specific resource is associated with one feedback state, and the feedback is signalled in multiple bits instead of in a single bit, the multiple bits representing different feedback states. In this example, at least 3 wireless devices share the same, at least 2, radio resources used for feedback signalling, and the actual usage of feedback resources is controlled from the network node receiving the data transmissions. This way, a significantly lower probability of data errors can be achieved when there is a large number of simultaneous retransmissions, to save retransmission resources for a slightly higher cost in feedback.

In another example, if there are 3 wireless devices having equal link quality and each wireless device is assigned a unique radio resource for initial transmission and two shared radio resources that can be used for retransmission by any 2 of the 3 wireless devices. The total probability of error Pe for any one of the 3 devices can be determined as the probability of error after two attempts on respective radio resources R1 and R2, denoted Pe(R1 +R2), plus the probability that all 3 users have an error after the first attempt on radio resource R1, i.e. $Pe(R1)^3 / 3$ and the retransmission resource is given to the other 2 wireless devices. This can be expressed as:

$$Pe \le Pe(R1 + R2) + Pe(R1)^3 / 3$$

Hence in this approximation Pe(R1+R2) is the probability of error, i.e. unsuccessful transmission of the data, for any one of the 3 wireless devices after the first and second transmission attempts on resources R1 and R2, respectively. But there is also an error event when the wireless device fails the first transmission using only resource R1, but is not assigned the retransmission resource R2, which is given by $Pe(R1)^3 / 3$, i.e. the probability that all 3 wireless devices fail the first transmission, where the assignment of the retransmission resource R2 is assigned using a fair "coin-toss", i.e. randomly, giving a 1/3 probability of assignment for each wireless device and where the retransmission resource R2 is assigned to the other 2 of the 3 wireless devices.

As a result, the total amount of radio resources needed for the above assignments is 3* R1 + 2* R2. The gain in reduced amount of used radio resources would be large if R2 > R1 (meaning that the resource R2 is larger than resource R1, e.g. in terms of time/frequency), and this gain is expected to be even larger with a larger group of wireless devices. A so-called "Q-function" may be used for estimating the error probability from link properties:

$$Q\left(\frac{1}{2}\sqrt{\frac{Eb}{N0}}\right)$$

where *Eb* is received energy per bit on the link and *N0* is noise on the link which may include interference if present. The ratio *Eb* / *N0* can thus be regarded as a useful measure or quantity of the Signal-to-Noise Ratio, SNR. In the field of statistics, the Q-function is well-known and represents the tail probability of a standard normal distribution.

By using the Q-function it can be seen that the first transmission attempt on resource R1 with SINR = 16 dB results in an initial error probability of around $10^{-3}$ and the first and second transmission attempts on resources R1+R2 with SINR = 22 dB gives an error probability of around $10^{-9}$, e.g. the second transmission attempt on resource R2 ~ 3*R1, which means that R2 contains 3 times more radio resources than R1. This gives a total error probability of ~$10^{-9}$ with a reduced total amount of resources. In this example, 25% of the radio resources for transmission and retransmission will be saved with the same error probability maintained. In other words, if 3*R1 is used in a first transmission and 2*R2=2*3*R1 is used in a second transmission, a total of 9*R1 resources are used in the above example. In a conventional procedure, the total amount of resources used would be greater, that is 3*R1 +3*R2=12*R1 since R2 is 3 times larger than R1, and 25% of the resources can thus be saved by using 9*R1 resources in the above example as compared to the conventional procedure.

In another example embodiment, the network node may signal to the wireless devices in the group that a first transmission mode shall be used for the set of concurrent transmissions of data, which set was received in the above-described action 306, and that a second transmission mode shall be used for the retransmission on the shared radio resource, as received in action 310, the second transmission mode being less robust to interference than the first transmission mode. In this embodiment, "less robust to interference" implies that a data transmission using the second transmission mode is more likely to be disturbed by interference than a data transmission using the first transmission mode when subjected to the same amount of interference.

If this embodiment is used, another example embodiment may be that the second transmission mode is selected from a set of transmission modes being preconfigured in the wireless devices in the group. In another example embodiment, the second transmission mode may be selected depending on a current SNR and reliability requirements for the wireless devices in the group. Further example embodiments include that the first transmission mode may be based on one of:

Orthogonal Frequency-Division Multiple Access (OFDMA), precoding based beam forming, and spatial multiplexing.

The second transmission mode may be based on one of:

Code Division Multiple Access (CDMA), Space Division Multiple Access (SDMA), Non-Orthogonal Multiple Access (NOMA), transmit diversity, and diversity allocation of radio resources.

Some examples of how the above first and second transmission modes may be employed in this solution will now be described.

In a first example, preconfigured parameters for NOMA can be used for retransmissions such that an initial transmission is performed using OFDM(A) as the first transmission mode and any retransmissions are performed using NOMA as the second transmission mode. In this case, the retransmissions from different devices may be detected by a multi-user detection mechanism in the receiver of the network node by enabling the use of completely or partially overlapping resources in time-frequency domain with no code-spreading.

In a second example, the preconfigured parameters for an alternative orthogonal transmission mode, such as CDMA, can be used for retransmissions such that an initial transmission is performed using OFDM(A) as the first transmission mode and any retransmissions are performed using CDMA as the second transmission mode. In this case, the retransmissions from different devices may be multiplexed in the code domain according to CDMA enabling the use of the same radio resources in time-frequency domain with different spreading codes for different respective devices where the spreading codes are orthogonal to one another. One such set of spreading codes or orthogonal codes corresponds to a specific spreading factor that determines how many wireless devices' transmissions can be multiplexed on the same time-frequency resource without interfering with one another.

In a third example, an initial transmission is performed using OFDM(A) as the first transmission mode, and any retransmissions are performed using CDMA as the second transmission mode. In this example, the network node is able to preconfigure at least the spreading factor for multiplexing potential retransmissions in the code domain according to CDMA in advance.

In a fourth example, a precoding based beam forming or spatial multiplexing is used as the first transmission mode for the initial transmission while a transmit diversity scheme is used as the second transmission mode for any retransmissions. By preconfiguring the wireless devices with this transmit diversity scheme, the amount of signalling overhead needed for a retransmission can be reduced.

In a fifth example, the resource allocation scheme is changed from a fine granular localized allocation, suitable for channel dependent scheduling, to be used as the first transmission mode for the initial transmission, to a diversity allocation to be used as the second transmission mode for any retransmissions. Examples of diversity schemes may include frequency hopping or distributed allocations in frequency.

In another example embodiment, the feedback signalling may comprise a Hybrid Automatic Repeat Request, HARQ, process, which will also be employed in some following further examples.

It was mentioned above that the retransmission of data on the shared radio resource may be contention-based. An example of how this embodiment may be employed will now be described.

In this embodiment a set of wireless devices, here called users u, is assigned a set of radio resources Rj for each transmission attempt j, i.e. j=1 is the initial transmission attempt, j=2 the first retransmission attempt etc.

For the initial transmission, each user is assigned a unique resource as each user is more or less always going to transmit data on their respective unique resources, provided that they have data to transmit. For example, if the user has missed its scheduling signalling indicating the unique resource, or does not have data or similar to transmit, the user will not transmit. For this initial transmission attempt, the user is thus assigned a unique resource, that is, one user $u_n$ is assigned a unique resource R1 $(u_n)$ and another user $u_m$ is assigned another unique resource R1 $(u_m)$, such that R1 $(u_n) \neq$ R1 $(u_m)$ if $n \neq m$, but for some resources Rj assigned for retransmissions, i.e. j>1, some users, including users $u_n$ and $u_m$, are sharing a retransmission resource. The choice of how many users should share the retransmission resource in Rj may, as mentioned above, depend on, for example, expected data error rate after the j:th transmission and also the expected HARQ signalling error rate, i.e. the feedback error rate.

EP 3 453 209 B1

As an example of how this embodiment may be implemented, it will for simplicity be assumed that there are no errors in the HARQ signalling. It will further be assumed that the scheduler is "fair", i.e. if for example 2 users are both assigned the same shared retransmission resource and both need to perform a retransmission, the shared resource is assigned with a 50% probability to each of the two users. In another example, the shared resource is assigned with a 33% probability to each user in the case of 3 users, etc. The above percentages thus indicate basically how large probability each user has of acquiring the shared retransmission resource in the case of fair scheduling, meaning that devices with equal priority have equal probability of acquiring the shared resource. This may be implemented by sending ACKs to users that need a retransmission but where some other user is given the retransmission resource, hence these users are "dropped" to save a user with highest priority, or luck.

In general, it is assumed that one radio resource has capacity to carry a data transmission or retransmission from one user. Further, in the following example, it is assumed that at most 2 transmission attempts of equal size will be used, and that an error probability of $10^{-9}$ after two transmissions is preferable. Further assuming that there are 2 identical users in one user group of MTC devices and that 2 corresponding unique radio resources will be used for the initial transmission attempt where j=1 and 1 shared radio resource will be used for the first retransmission attempt where j=2. This implies that the transmission errors include the probability that communication of data fails after using 2 transmission attempts plus the probability that the other user sharing the resource has a retransmission to perform and is given the retransmission resource instead. Hence if P(e1) is the error probability for the first transmission from one user and P(e2 | e1) is the error probability for the second transmission, i.e. the retransmission, by the user given that the first transmission by the user fails, the error probability $P_{error}$ for the user after two transmission attempts is:

$$P_{error} = P(e1) * ( P(e2 \mid e1) + (1 - P(e2 \mid e1)) * 0.5 * P(e1))$$

In this expression, the first term P(e1) * ( P(e2 | e1) is the probability that communication of data from one of the users fails after using two transmission attempts, and the term P(e1) * P(e1)*0.5 is the probability that the other user sharing the resource has a retransmission to perform and is given the retransmission resource instead. The term P(e1) * P(e1) * ( P(e2 | e1)*0.5 is a correction term as the case where both users fail in the first transmission and the user whose error probability is determined fails also in the second transmission would otherwise be counted twice.

In this context, the above-described "Q-function" may be employed:

$$Q\left(\frac{1}{2}\sqrt{\frac{Eb}{N0}}\right)$$

By using the Q-function it can be determined that a SINR of 18.58 dB is needed on each resource for normal HARQ and only slightly higher SINR at 18.59 dB for the contention based scheme. This implies that only about 75% of the resources are needed when using the described procedure, i.e. 2 resources for the first transmissions but only 1 resource for retransmission, compared to 2 resources using normal HARQ in a conventional procedure. For example, if R1=R2 the total amount of used resources is 2*R1+R2=3*R1. In the conventional procedure, the total amount of used resources would be 2*R1+2*R2=4*R1, which means that only ¼=75% of the resources in the conventional procedure are needed in the above example. If knowledge is available of how frequently a user does not transmit, e.g. since it does not have data available, this can also be utilized in computing the total error probability.

It was also mentioned above that the network node may broadcast priority levels for the wireless devices, so that the wireless devices are enabled to perform retransmission depending on the priority levels. An example of how this embodiment may be employed will now be described with reference to Fig. 5, again denoting the wireless devices as users.

In this example it is assumed that all users listen to the HARQ feedback to all other users. As described above, the users may be prioritized, for example, such that user 1 has the highest priority, etc. This prioritization may be done in different ways. One possible way is to give highest priority to the "worst" user, i.e. the user that is most likely to need all the retransmission attempts. In this case it may be assumed that the worst user is also the user with the worst i.e. lowest path-gain. However, other reasons may also be used to give a user high error probability, such as when the device's receiver performance is known to be low or restricted, or depending on the expected amount of traffic, the user's subscription (e.g. premium), battery status, etc., and the embodiment is not limited in this respect.

Then the retransmission resources are distributed according to this prioritization, i.e. if a NACK is transmitted to user 1 this implies that user 1 will use a shared resource 1 for performing a retransmission, etc. This further implies that a user with a low priority, e.g. indicated by a high number in a priority list, could be forced to wait for its retransmission resource to occur. The transmission behaviour of a group of wireless devices 502 denoted D1 - D6 depending on their priorities, is shown in Fig. 5.

In this figure it is assumed that the devices D1 - D6 have received priorities from the network node such that device D1 has the highest priority and device D6 has the lowest priority. It is also assumed that a unique radio resource has been assigned to each device for initial transmission of data. T-1 denotes an opportunity for initial transmission of respective data from the devices using the respective unique radio resources. In the feedback signalling from the network node, denoted FB-1, devices D4 and D6 receive an ACK, while devices D1, D2, D3 and D5 receive a NACK. This means that D4 and D6 need not retransmit and D1, D2, D3 and D5 need to retransmit their data.

In a first retransmission opportunity T-2, a shared radio resource assigned for retransmission has room for transmission from two devices, and since D1 and D2 have the two highest priorities above D3 and D5, it is D1 and D2 that perform retransmission in T-2 while D3 and D5 do not retransmit. The feedback signalling FB-2 from the network node for this retransmission indicates an ACK for D2 and NACK for D1 and the NACK for D3 and D5 remain. The NACK is thus signalled once again in FB-2 for D1, D3 and D5. Alternatively, the NACKs to D3 and D5 may be "remembered" if not signalled again in FB-2.

The shared radio resource assigned for the next retransmission opportunity T-3 has likewise room for transmission from two devices, and this time D1 and D3 have the two highest priorities above the remaining device D5, since D2 does not need to retransmit having received an ACK. It is thus D1 and D3 that perform retransmission in T-3 while D5 does not retransmit. The next feedback signalling FB-3 from the network node indicates an ACK for both D1 and D3 while the NACK for D5 remains. There is thus only one device left that needs to retransmit, namely D5, and the shared radio resource assigned for the next retransmission opportunity T-4 only need to have room for retransmission from device D5 which accordingly performs its retransmission in T-4.

The motivation for giving the worst users highest priority may not only be to maintain low error probability for these users despite their worse path-gain, it could also be to maintain a low overhead in the downlink channel used for HARQ, i.e. feedback signalling. As an example the HARQ channel may be designed for an error probability of $1*10^{-10}$ and there may be six users with 1 dB path-gain difference, this then implies that the error probabilities, using the above Q-function, for the other users to correctly hear the HARQ transmission for the first user is $5*10^{-13}$, $6*10^{-16}$, $1*10^{-19}$, $3*10^{-23}$ and $6*10^{-30}$. This implies that even if no additional resources are spent to reduce the error probability on the HARQ channel, the error probabilities are more or less unchanged using such a HARQ scheme. For the above example the HARQ error probability for the first user is increased from $1*10^{-10}$ to $1.005*10^{-10}$, which could be compensated by adding a very small extra overhead for ACK/NACK signalling in the HARQ channel.

For example, a user may continue to listen for feedback in consecutive transmission attempts to detect when retransmission resources will not be used by any users with higher priority. In another example the number of users sharing the same resource may be restricted such that the probability that more users than available resources need to retransmit is low compared to a target error probability.

It was mentioned above that multiple bits may be used to represent different feedback states in the feedback signalling. In a further example, an uneven constellation of code points in a phase-amplitude modulation scheme may be used for feedback, e.g. with a large distance between an ACK state and multiple possible NACK states compared to the distance between different NACK-states related to different retransmission resources. An example of this is illustrated in Fig. 5A where different combinations of amplitude and phase, represented by "dots" in the figure, can be interpreted by the receiver in a wireless device as valid code points when receiving from the network node a feedback signal encoded according to a phase-amplitude modulation scheme. Basically, the receiver may try to determine the probability that the code of a given dot was sent given the received signal which will deviate somewhat from the dots due to noise. The "distance" between two dots correspond to the error probability when interpreting the signal. If two dots are close together, the probability of mapping the received signal to the wrong dot is higher. For example, occurring noise may move the received signal from the sent dot to an adjacent erroneous "dot".

The left part of Fig. 5A illustrates an "even constellation" where all code points are evenly distributed, and the right part illustrates an "uneven constellation" where 12 dots representing different NACK states are located close to one another, shown as a dashed area, while there is a large distance between a dot representing ACK and the dots representing the NACK states. This way, the probability of wrongly interpreting a NACK as an ACK, or vice versa, can be kept low while the risk of using the wrong retransmission resource is higher, but since this can be detected from the network node and only causes a problem when the second retransmission resource is used, which has a probability lower than 1 this has lower impact on the overall performance. In further examples, the distance difference may be dependent on the expected usage probability and be signalled from the receiver.

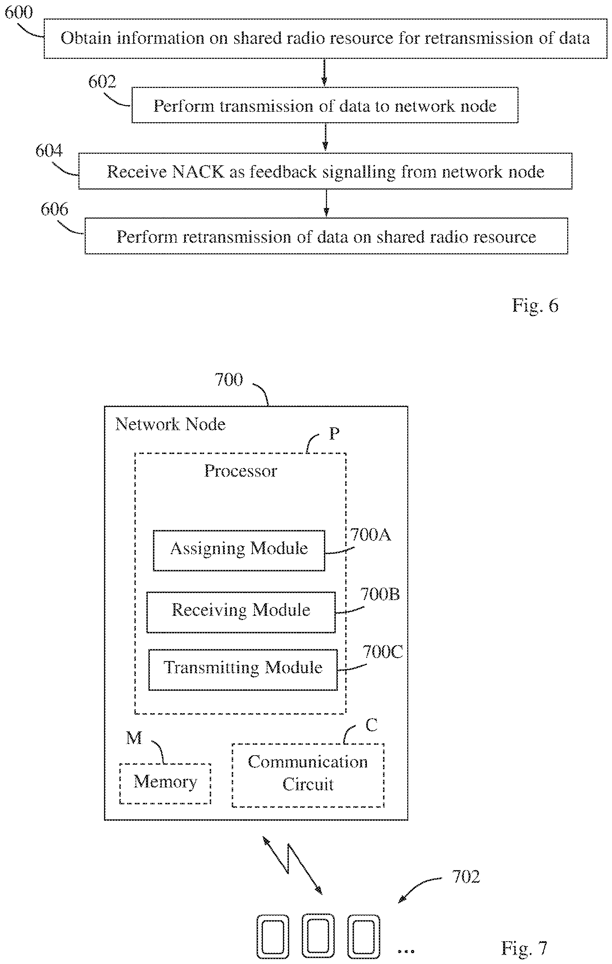

An example of how the solution may be employed will now be described with reference to the flow chart in Fig. 6 which illustrates a procedure with actions performed by a wireless device when being served by a network node in a radio network where feedback signalling is employed to indicate either an ACK or a NACK of correct reception of data transmitted by wireless devices. The wireless device performing the following actions may correspond to any of the above-described wireless devices involved in the procedures of Figs 3-5.

A first **action 600** illustrates that the wireless device obtains, prior to performing a transmission of data to the network node, information about a shared radio resource to be used for retransmission of the data in case the feedback signalling for the transmission of data indicates a NACK, the shared radio resource being assigned to a group of wireless devices comprising the wireless device. In a next **action 602,** the wireless device performs the transmission of data to the network node. In a further **action 604,** the wireless device receives from the network node, as said feedback signalling, a NACK for the transmission of data. The wireless device then in an **action 606** accordingly performs a retransmission of the data on the shared radio resource to the network node.

Some further non-limiting embodiments that may be employed in the above procedure will now be described. In one example embodiment, the feedback signalling may comprise a priority level for each wireless device in the group, and said retransmission of the data on the shared radio resource may in that case be performed depending on the priority level for the wireless device in relation to the priority levels of other wireless devices in the group.

In another example embodiment, the retransmission of the data on the shared radio resource may be performed by the wireless device when the wireless device has a priority level higher than the priority level of other wireless devices in the group for which the feedback signalling indicates a NACK.

In another example embodiment, the wireless device may further obtain information indicating that a first transmission mode shall be used for said transmission of the data, and that a second transmission mode shall be used for the retransmission of the data on the shared radio resource, the second transmission mode being less robust to interference than the first transmission mode. The wireless device may in this case perform the transmission of the data using the first transmission mode, and perform the retransmission of the data using the second transmission mode. In another example embodiment, the retransmission of the data on the shared radio resource may be contention-based.

It was mentioned above that the procedures illustrated in Figs 3 and 4 and embodiments thereof, may be performed by a network node of a radio network. The block diagram in Fig. 7 illustrates a detailed but non-limiting example of how a network node 700 may be structured to bring about the above-described solution and embodiments thereof.

The network node 700 may thus be configured to operate according to any of the above-described examples and embodiments. The network node 700 comprises processing circuitry, e.g. in form of a processor P as shown in Fig. 7, and a memory M, the memory M comprising instructions executable by said processor P whereby the network node 700 is operative as described herein. The network node 700 also comprises a communication circuit C representing suitable equipment for receiving and sending signals in the manner described herein. Throughout this description, the term "processing circuitry" may be used instead of "processor". The communication circuit C is configured for radio communication with wireless devices 702 over suitable radio interfaces using a suitable protocol for radio communication depending on the implementation. The solution and embodiments herein are thus not limited to using any specific types of networks, technology or protocols for radio communication.

The network node 700 comprises means configured or arranged to perform at least some of the actions 300-310 and 400-410 of the flow charts in Figs 3 and 4, respectively. The network node 700 is arranged to serve wireless devices in the radio network where feedback signalling is employed to indicate either an acknowledgement, ACK, or a non-acknowledgement, NACK, of correct reception of data transmitted by the wireless devices.

The network node 700 is configured to assign, prior to receiving a set of concurrent transmissions of data from a group of wireless devices 702 served by the network node 700, a shared radio resource to the group of wireless devices 702 to be used for retransmission in case the feedback signalling for at least one transmission of data out of the set of concurrent transmissions of data indicates a NACK. This assigning operation may be performed by an **assigning module 700A** in the network node 700, e.g. in the manner described for action 302 above.

The network node 700 is also configured to receive the set of concurrent transmissions of data from the group of wireless devices 702 wherein a subset of the concurrent transmissions of data is not received correctly. This receiving operation may be performed by a **receiving module 700B** in the network node 700, e.g. in the manner described for action 306 above.

The network node 700 is further configured to transmit, as said feedback signalling, a NACK to those wireless devices in the group of wireless devices that transmitted the subset that was not received correctly. This transmitting operation may be performed by a **transmitting module 700C** in the network node 700, e.g. in the manner described for action 308 above. The network node 700 is also configured to receive, on the shared radio resource, a retransmission of at least one of the concurrent transmissions of data in the subset that was not received correctly from at least one wireless device to which said NACK was transmitted. This receiving operation may be performed by the receiving module 700B, e.g. in the manner described for action 310 above.

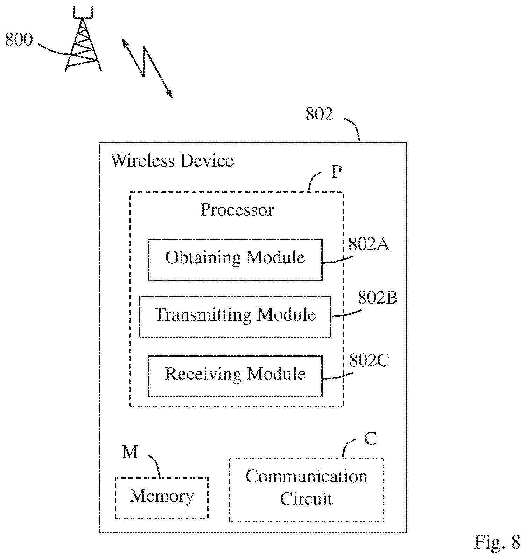

It was further mentioned above that the procedure illustrated in Fig. 6 and embodiments thereof, may be performed by a wireless device. The block diagram in Fig. 8 illustrates a detailed but non-limiting example of how a wireless device 802 may be structured to bring about the above-described solution and embodiments thereof.

The wireless device 802 may thus be configured to operate according to any of the above-described examples and embodiments. The wireless device 802 comprises processing circuitry, e.g. in form of a processor P as shown in Fig. 8, and a memory M, the memory M comprising instructions executable by said processor P whereby the wireless device 802 is operative as described herein. The wireless device 802 also comprises a communication circuit C representing suitable equipment for receiving and sending signals in the manner described herein. The communication circuit C is configured for radio communication with a network node 800 over a suitable radio interface using a suitable protocol for radio communication depending on the implementation.

The wireless device 802 comprises means configured or arranged to perform the actions 600-606 of the flow chart in Fig. 6. The wireless device 802 is capable of being served by a network node 800 in a radio network where feedback signalling is employed to indicate either an acknowledgement, ACK, or a non-acknowledgement, NACK, of correct reception of data transmitted by the wireless device.

The wireless device 802 is configured to obtain, prior to performing a transmission of data to the network node 800, information about a shared radio resource to be used for retransmission of the data in case the feedback signalling for the transmission of data indicates a NACK, the shared radio resource being assigned to a group of wireless devices comprising the wireless device 802. This obtaining operation may be performed by an **obtaining module 802A** in the wireless device 802, e.g. in the manner described for action 600 above.

The wireless device 802 is also configured to perform transmission of data to the network node 800. This transmitting operation may be performed by a **transmitting module 802B** in the wireless device 802, e.g. in the manner described for action 602 above.

The wireless device 802 is further configured to receive from the network node 800 as said feedback signalling, a NACK for the transmission of data. This receiving operation may be performed by a **receiving module 802C** in the wireless device 802, e.g. in the manner described for action 604 above. The wireless device 802 is also configured to perform a retransmission of the data on the shared radio resource to the network node 800. This retransmitting operation may be performed by the transmitting module 802B, e.g. in the manner described for action 606 above.

It should be noted that Figs 7 and 8 illustrates various functional modules in the network node 700 and the wireless device 802, respectively, and the skilled person is able to implement these functional modules in practice using suitable software and hardware. Thus, the solution is generally not limited to the shown structures of the network node 700 and the wireless device 802, and the functional modules 700A-C and 802A-C therein may be configured to operate according to any of the features and embodiments described in this disclosure, where appropriate.

The functional modules 700A-C and 802A-C described above may be implemented in the network node 700 and the wireless device 802, respectively, by means of program modules of a respective computer program comprising code means which, when run by the processing circuitry, e.g. in form of processor P, causes the network node 700 and the wireless device 802 to perform the above-described actions and procedures. Each processor P may comprise a single Central Processing Unit (CPU), or could comprise two or more processing units. For example, each processor P may include a general purpose microprocessor, an instruction set processor and/or related chips sets and/or a special purpose microprocessor such as an Application Specific Integrated Circuit (ASIC). Each processor P may also comprise a storage for caching purposes.

Each computer program may be carried by a computer program product in each of the network node 700 and the wireless device 802 in the form of a memory having a computer readable medium and being connected to the processor P. The computer program product or memory M in each of the network node 700 and the wireless device 802 thus comprises a computer readable medium on which the computer program is stored e.g. in the form of computer program modules or the like. For example, the memory M in each node may be a flash memory, a Random-Access Memory (RAM), a Read-Only Memory (ROM) or an Electrically Erasable Programmable ROM (EEPROM), and the program modules could in alternative embodiments be distributed on different computer program products in the form of memories within the respective network node 700 and the wireless device 802.

The solution described herein may thus be implemented in each of the network node 700 and the wireless device 802 by means of a computer program comprising instructions which, when executed on at least one processor, cause the at least one processor to carry out the actions according to any of the above features and embodiments, where appropriate. A carrier containing the above computer program may also be used when implementing the solution, wherein the carrier is one of an electronic signal, optical signal, radio signal, or computer readable storage medium.

It was thus mentioned above that the group of wireless devices may be selected based on an expected error rate for data transmission and/or feedback signalling, referred to as data error rate and feedback error rate, respectively. For example, an expected data error rate may be determined for a data transmission by using the above-described Q-function, which is a well-known function in the art, provided that an SNR of the transmission can be obtained. In this context of applying a Q-function for determining the expected data error rate on the forward link, the Q-function may thus be employed as follows:

$$Q\left(\frac{1}{2}\sqrt{\frac{Eb}{N0}}\right)$$

where $Eb$ is received energy per bit and $N0$ is noise which may include interference if present. The ratio $Eb/N0$ can thus be regarded as a useful measure or quantity of the SNR. Any other suitable way of determining the expected data error rate may also be used and the solution is not limited in this respect.

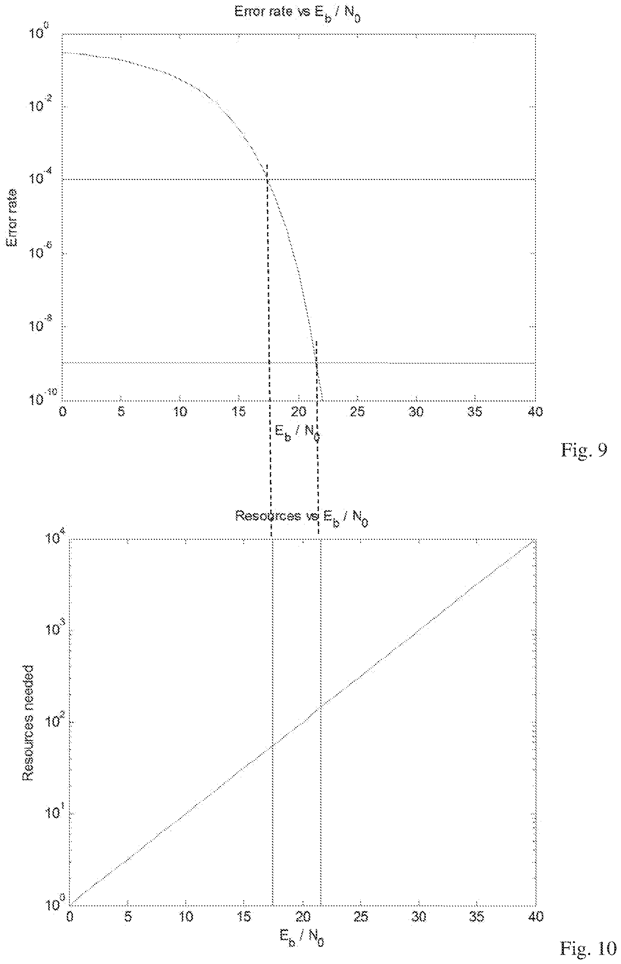

The diagram in Fig. 9 illustrates how the error rate on a radio link is generally dependent on signal quality in terms of SNR which is represented in the figure by the ratio $Eb/N0$ as measured in dB. The error rate can be determined by using the above-mentioned Q-function. This figure further illustrates which values of the SNR are required to achieve two different values of the error rate, $10^{-4}$ and $10^{-9}$. The radio resources needed to achieve these two SNRs can be read from Fig. 10 which illustrates how resources needed depend on SNR, in this case $Eb/N0$. It can be seen in this figure that the lower error rate of $10^{-9}$ requires a relatively higher SNR and a significantly larger amount of radio resources than the higher error rate of $10^{-4}$. Roughly three times more radio resources are needed to achieve the lower error rate of $10^{-9}$ as compared to the higher error rate of $10^{-4}$.

The feedback error rate should be measured as a NACK to ACK error rate for the situation when NACK is erroneously interpreted as ACK, since in that case the data will not be retransmitted and is therefore lost at the data receiving node. For feedback signaling, a NACK should generally be considered to be received by the data sending node unless an ACK is positively received.

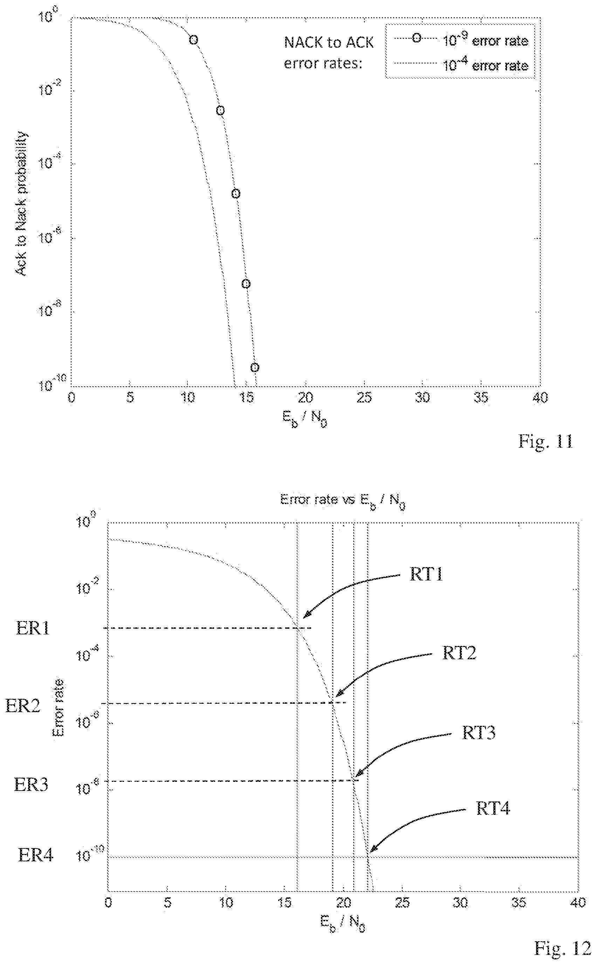

The diagram in Fig. 11 shows how ACK to NACK probability or rate is dependent on SNR represented by $Eb/N0$ in dB, for the error rate of $10^{-4}$ (the curve to the left) and for the lower error rate of $10^{-9}$ (the curve to the right), respectively. It can be seen in this figure that a higher SNR, and therefore more radio resources, is needed for the error rate of $10^{-9}$ than for the error rate of $10^{-4}$, to achieve the same ACK to NACK probability. Hence, if the NACK to ACK error rate of $10^{-9}$ is required, about twice the amount of radio resources is needed as compared to when the NACK to ACK error rate of $10^{-4}$ is required for a given ACK to NACK probability or rate.

Finally, the diagram in Fig. 12 shows how different error rates can be achieved when employing different numbers of retransmission attempts. The curve therein also shows how the error rate on a radio link is generally dependent on signal quality in terms of SNR represented by $Eb/N0$ in dB, which is similar to the curve in Fig. 9. Four different numbers of retransmission attempts are shown as RT1-RT4. It can be understood that each added retransmission attempt increases the SNR which is marked by the four values of SNR in the figure which provide four different values of resulting feedback error rate as follows.

When one retransmission attempt is employed at "RT1" the resulting feedback error rate "ER1" is $7.3 \times 10^{-3}$. Further, when two retransmission attempts are employed at "RT2" the resulting lower feedback error rate "ER2" is $3.4 \times 10^{-6}$, when three retransmission attempts are employed at "RT3" the resulting still lower feedback error rate "ER3" is $1.8 \times 10^{-8}$, and finally when four retransmission attempts are employed at "RT4" the resulting lowest feedback error rate "ER4" is $1 \times 10^{-10}$.

It should be noted that in this example, the SNR is increased, as marked by the four SNR values in the figure, to a lesser degree with each added retransmission attempt.. Thus, the increase of SNR, and corresponding need for increased amount of radio resources for growing number of feedback messages, is less from RT2 to RT3 than from RT1 to RT2, and it is even lesser from RT3 to RT4 than from RT2 to RT3. In other words, As a result, the network node may assign reduced amounts of radio resources for feedback signaling to each subsequent retransmission attempt since the relative gain in SNR is decreased for each added retransmission but the absolute energy produced in each transmission is the same.

For a conventional resource assignment, the feedback error rate is typically around $1.2 \times 10^{-6}$. Using the above-described example, the resource assignment for feedback messages would instead be adaptively picked for the different retransmission attempts so that the usage of radio resources can be more efficient and even optimized. In most radio technologies, the choice of the amount of resources for feedback messages is made step-wise in discrete intervals, e.g. corresponding to different amounts of assigned frequency resources for data transmission.

By employing at least some of the embodiments described herein, the consumption or usage of precious radio resources can be reduced without causing a substantial increase in retransmissions and/or signaling, which can be achieved by assigning a shared radio resource to multiple wireless devices for retransmission, instead of assigning one unique radio resource to each and every wireless device for retransmission. Furthermore, by assigning the shared radio resource for retransmission prior to receiving the concurrent transmissions of data, latency can be reduced in the procedure.

While the solution has been described with reference to specific exemplifying embodiments, the description is generally only intended to illustrate the inventive concept and should not be taken as limiting the scope of the solution.

For example, the terms "network node", "wireless device", "feedback signaling" and "radio resources" have been used throughout this disclosure, although any other corresponding entities, functions, and/or parameters could also be used having the features and characteristics described here. The solution is defined by the appended claims.

**Claims**

1. A method performed by a network node (500, 700) serving wireless devices in a radio network where feedback signalling is employed to indicate either an acknowledgement, ACK, or a non-acknowledgement, NACK, of correct reception of data transmitted by the wireless devices, the method comprising:

   - assigning (302), prior to receiving a set of concurrent transmissions of data from a group of wireless devices (502, 702) served by the network node (500, 700), a shared radio resource to the group of wireless devices (502, 702) to be used for retransmission in case the feedback signalling for at least one transmission of data out of the set of concurrent transmissions of data indicates a NACK,
   - receiving (306) the set of concurrent transmissions of data from the group of wireless devices (502, 702) wherein a subset of the concurrent transmissions of data is not received correctly,
   - transmitting (308), as said feedback signalling, a NACK to those wireless devices in the group of wireless devices that transmitted the subset that was not received correctly, and
   - receiving (310), on the shared radio resource, a retransmission of at least one of the concurrent transmissions of data in the subset that was not received correctly from at least one wireless device to which said NACK was transmitted,

   wherein the network node (700) signals to the wireless devices (702) in the group that a first transmission mode shall be used for the set of concurrent transmissions of data, and that a second transmission mode shall be used for the retransmission on the shared radio resource, the second transmission mode being less robust to interference than the first transmission mode.

2. A network node (700), arranged to serve wireless devices for a radio network where feedback signalling is employed to indicate either an acknowledgement, ACK, or a non-acknowledgement, NACK, of correct reception of data transmitted by the wireless devices, wherein the network node (700) is configured to:

   - assign, prior to receiving a set of concurrent transmissions of data from a group of wireless devices (702) served by the network node (700), a shared radio resource to the group of wireless devices (702) to be used for retransmission in case the feedback signalling for at least one transmission of data out of the set of concurrent transmissions of data indicates a NACK,
   - receive the set of concurrent transmissions of data from the group of wireless devices (702) wherein a subset of the concurrent transmissions of data is not received correctly,
   - transmit, as said feedback signalling, a NACK to those wireless devices in the group of wireless devices that transmitted the subset that was not received correctly, and
   - receive, on the shared radio resource, a retransmission of at least one of the concurrent transmissions of data in the subset that was not received correctly from at least one wireless device to which said NACK was transmitted,

   wherein the network node (700) is further configured to signal to the wireless devices (702) in the group that a first transmission mode shall be used for the set of concurrent transmissions of data, and that a second transmission mode shall be used for the retransmission on the shared radio resource, the second transmission mode being less robust to interference than the first transmission mode.

3. A network node (700) according to claim 2, wherein the network node (700) is configured to select the group of wireless devices (702) based on an expected error rate for transmission and/or retransmission of data from the respective wireless devices (702).

4. A network node (700) according to claim 2 or 3, wherein the network node (700) is configured to select the group of wireless devices (702) based on an expected error rate for the feedback signalling to the respective wireless devices (702).

5. A network node (700) according to any one of claims 2-4, the network node (700) is configured to assign, prior to receiving initial transmissions of data for which a unique radio resource is assigned to each individual wireless device in the group, a further radio resource for the set of concurrent transmissions of data, wherein a smaller amount of resources are assigned as the shared radio resource for the retransmission as compared to an amount of resources assigned as the further radio resource.

6. A network node (700) according to any one of claims 2-5, wherein the retransmission of data received on the shared radio resource is contention-based.

7. A network node (700) according to any one of claims 2-5, wherein the network node (700) is configured to broadcast the feedback signalling and a priority level for each wireless device (702) in the group, so that the wireless devices (702) in the group for which the feedback signalling indicates a NACK are enabled to perform retransmission of the data on the shared radio resource depending on the priority levels, wherein the priority levels indicates that a wireless device having higher priority than another wireless device can use the shared radio resource for retransmission, while the wireless device having lower priority can use the shared radio resource for retransmission only if the shared radio resource is not used by the wireless device having higher priority.

8. A network node (700) according to any one of claims 2-7, wherein the network node (700) is configured to assign multiple shared radio resources for retransmission of data and wherein the feedback signalling comprises multiple bits for indicating the shared radio resources.

9. A network node (700) according to any of claims 2-8, wherein the first transmission mode is based on one of: Orthogonal Frequency-Division Multiple Access OFDMA, precoding based beam forming, and spatial multiplexing, and wherein the second transmission mode is based on one of:
Code Division Multiple Access CDMA, Space Division Multiple Access SDMA, Non-Orthogonal Multiple Access NOMA, transmit diversity, and diversity allocation of radio resources.

10. A method performed by a wireless device (502, 802) when being served by a network node (500, 800) in a radio network where feedback signalling is employed to indicate either an acknowledgement, ACK, or a non-acknowledgement, NACK, of correct reception of data transmitted by the wireless device, the method comprising:

    - obtaining (600), prior to performing a transmission of data to the network node (500, 800), information about a shared radio resource to be used for retransmission of the data in case the feedback signalling for the transmission of data indicates a NACK, the shared radio resource being assigned to a group of wireless devices comprising the wireless device (502, 802),
    - performing (602) the transmission of data to the network node (500, 800),
    - receiving (604) from the network node (500, 800), as said feedback signalling, a NACK for the transmission of data,
    - performing (606) a retransmission of the data on the shared radio resource to the network node (500, 800), and
    - obtaining information indicating that a first transmission mode shall be used for said transmission of the data and that a second transmission mode shall be used for the retransmission of the data on the shared radio resource, the second transmission mode being less robust to interference than the first transmission mode, and to perform the transmission of the data using the first transmission mode and perform the retransmission of the data using the second transmission mode.

11. A wireless device (802) capable of being served by a network node (800) for a radio network where feedback signalling is employed to indicate either an acknowledgement, ACK, or a non-acknowledgement, NACK, of correct reception of data transmitted by the wireless device, wherein the wireless device (802) is configured to:

    - obtain, prior to performing a transmission of data to the network node (800), information about a shared radio resource to be used for retransmission of the data in case the feedback signalling for the transmission of data indicates a NACK, the shared radio resource being assigned to a group of wireless devices comprising the wireless device (802),
    - perform transmission of data to the network node (800),
    - receive from the network node (800) as said feedback signalling, a NACK for the transmission of data, and
    - perform a retransmission of the data on the shared radio resource to the network node (800),

wherein the wireless device (802) is further configured to obtain information indicating that a first transmission mode shall be used for said transmission of the data and that a second transmission mode shall be used for the retransmission of the data on the shared radio resource, the second transmission mode being less robust to interference than the first transmission mode, and to perform the transmission of the data using the first transmission mode and perform the retransmission of the data using the second transmission mode.

12. A wireless device (802) according to claim 11, wherein said feedback signalling comprises a priority level for each wireless device in the group, and the wireless device (802) is configured to perform said retransmission of the data on the shared radio resource depending on the priority level for the wireless device (802) in relation to the priority levels of other wireless devices in the group.

13. A wireless device (802) according to claim 11, wherein the wireless device (802) is configured to perform said retransmission of the data on the shared radio resource when the wireless device (802) has a priority level higher than the priority level of other wireless devices in the group for which the feedback signalling indicates a NACK, wherein the priority levels indicates that a wireless device having higher priority than another wireless device can use the shared radio resource for retransmission, while the wireless device having lower priority can use the shared radio resource for retransmission only if the shared radio resource is not used by the wireless device having higher priority.

14. A wireless device (802) according to any one of claims 11-13, wherein said retransmission of the data on the shared radio resource is contention-based.

**Patentansprüche**

1. Verfahren, das von einem Netzwerkknoten (500, 700) durchgeführt wird, der drahtlose Vorrichtungen in einem Funknetzwerk bedient, wobei eine Rückmeldesignalisierung verwendet wird, um entweder eine Bestätigung (Acknowledgement, ACK) oder eine Nichtbestätigung (Non-Acknowledgement, NACK) des korrekten Empfangs von Daten anzuzeigen, die durch die drahtlosen Vorrichtungen übertragen werden, wobei das Verfahren Folgendes umfasst:

   - Zuweisen (302), vor dem Empfangen eines Satzes von gleichzeitigen Übertragungen von Daten von einer Gruppe von drahtlosen Vorrichtungen (502, 702), die von dem Netzwerkknoten (500, 700) bedient werden, einer gemeinsam genutzten Funkressource zu der Gruppe von drahtlosen Vorrichtungen (502, 702), die für eine erneute Übertragung zu verwenden ist, falls die Rückmeldesignalisierung für mindestens eine Datenübertragung aus dem Satz von gleichzeitigen Datenübertragungen eine NACK anzeigt,
   - Empfangen (306) des Satzes von gleichzeitigen Übertragungen von Daten von der Gruppe von drahtlosen Vorrichtungen (502, 702) wobei eine Teilmenge der gleichzeitigen Übertragungen von Daten nicht korrekt empfangen wird,
   - Übertragen (308), als die Rückmeldesignalisierung, eines NACK zu denjenigen drahtlosen Vorrichtungen in der Gruppe von drahtlosen Vorrichtungen, die die Teilmenge, die nicht korrekt empfangen wurde, übertragen haben, und
   - Empfangen (310), an der gemeinsamen Funkressource, einer erneuten Übertragung von mindestens einer der gleichzeitigen Übertragungen von Daten in der Teilmenge, die nicht korrekt empfangen wurde, von mindestens einer drahtlosen Vorrichtung, an die die NACK übertragen wurde,

   wobei der Netzwerkknoten (700) den drahtlosen Vorrichtungen (702) in der Gruppe signalisiert, dass ein erster Übertragungsmodus für die Menge der gleichzeitigen Übertragungen von Daten verwendet werden soll, und dass ein zweiter Übertragungsmodus für die erneute Übertragung auf der gemeinsam genutzten Funkressource verwendet werden soll, wobei der zweite Übertragungsmodus weniger störungsfest ist als der erste Übertragungsmodus.

2. Netzwerkknoten (700), der dafür ausgelegt ist, drahtlose Vorrichtungen für ein Funknetzwerk zu bedienen, wobei eine Rückmeldesignalisierung verwendet wird, um entweder eine Bestätigung, ACK, oder eine Nichtbestätigung, NACK, des korrekten Empfangs von Daten anzuzeigen, die durch die drahtlosen Vorrichtungen übertragen werden, wobei der Netzwerkknoten (700) für Folgendes konfiguriert ist:

   - Zuweisen, vor dem Empfangen eines Satzes von gleichzeitigen Übertragungen von Daten von einer Gruppe von drahtlosen Vorrichtungen (702), die von dem Netzwerkknoten (700) bedient werden, einer gemeinsam genutzten Funkressource zu der Gruppe von drahtlosen Vorrichtungen (702), die für eine erneute Übertragung zu verwenden ist, falls die Rückmeldesignalisierung für mindestens eine Datenübertragung aus dem Satz von gleichzeitigen Datenübertragungen eine NACK anzeigt,

- Empfangen des Satzes von gleichzeitigen Übertragungen von Daten von der Gruppe von drahtlosen Vorrichtungen (702) wobei eine Teilmenge der gleichzeitigen Übertragungen von Daten nicht korrekt empfangen wird,

- Übertragen, als die Rückmeldesignalisierung, eines NACK zu denjenigen drahtlosen Vorrichtungen in der Gruppe von drahtlosen Vorrichtungen, die die Teilmenge, die nicht korrekt empfangen wurde, übertragen haben, und

- Empfangen, an der gemeinsamen Funkressource, einer erneuten Übertragung von mindestens einer der gleichzeitigen Übertragungen von Daten in der Teilmenge, die nicht korrekt empfangen wurde, von mindestens einer drahtlosen Vorrichtung, an die die NACK übertragen wurde,

wobei der Netzwerkknoten (700) ferner dafür konfiguriert ist, den drahtlosen Vorrichtungen (702) in der Gruppe zu signalisieren, dass ein erster Übertragungsmodus für die Menge der gleichzeitigen Übertragungen von Daten verwendet werden soll, und dass ein zweiter Übertragungsmodus für die erneute Übertragung auf der gemeinsam genutzten Funkressource verwendet werden soll, wobei der zweite Übertragungsmodus weniger störungsfest ist als der erste Übertragungsmodus.

3. Netzwerkknoten (700) nach Anspruch 2, wobei der Netzwerkknoten (700) dafür konfiguriert ist, die Gruppe der drahtlosen Vorrichtungen (702) basierend auf einer erwarteten Fehlerrate für die Übertragung und/oder erneute Übertragung von Daten von den jeweiligen drahtlosen Vorrichtungen (702) auszuwählen.

4. Netzwerkknoten (700) nach Anspruch 2 oder 3, wobei der Netzwerkknoten (700) dafür konfiguriert ist, die Gruppe der drahtlosen Vorrichtungen (702) basierend auf einer erwarteten Fehlerrate für die Rückmeldesignalisierung an die jeweiligen drahtlosen Vorrichtungen (702) auszuwählen.

5. Netzwerkknoten (700) nach einem der Ansprüche 2 bis 4, wobei der Netzwerkknoten (700) dafür konfiguriert ist, vor dem Empfang anfänglicher Datenübertragungen, für die jeder einzelnen drahtlosen Vorrichtung in der Gruppe eine eindeutige Funkressource zugewiesen wird, eine weitere Funkressource für den Satz gleichzeitiger Datenübertragungen zuzuweisen, wobei eine kleinere Menge an Ressourcen als die gemeinsame Funkressource für die erneute Übertragung zugewiesen wird, verglichen mit einer Menge an Ressourcen, die als die weitere Funkressource zugewiesen wird.

6. Netzwerkknoten (700) nach einem der Ansprüche 2 bis 5, wobei die erneute Übertragung von Daten, die auf der gemeinsam genutzten Funkressource empfangen werden, konkurrenzbasiert ist.

7. Netzwerkknoten (700) nach einem der Ansprüche 2 bis 5, wobei der Netzwerkknoten (700) dafür konfiguriert ist, die Rückmeldesignalisierung und eine Prioritätsstufe für jede drahtlose Vorrichtung (702) in der Gruppe zu senden, so dass die drahtlosen Vorrichtungen (702) in der Gruppe, für die die Rückmeldesignalisierung eine NACK anzeigt, in der Lage sind, eine erneute Übertragung der Daten auf der gemeinsam genutzten Funkressource in Abhängigkeit von den Prioritätsstufen durchzuführen, wobei die Prioritätsebenen anzeigen, dass eine drahtlose Vorrichtung, die eine höhere Priorität als eine andere drahtlose Vorrichtung hat, die gemeinsame Funkressource für die erneute Übertragung verwenden kann, während die drahtlose Vorrichtung, die eine niedrigere Priorität hat, die gemeinsam genutzte Funkressource nur dann für eine erneute Übertragung verwenden kann, wenn die gemeinsam genutzte Funkressource nicht von der drahtlosen Vorrichtung mit der höheren Priorität verwendet wird.

8. Netzwerkknoten (700) nach einem der Ansprüche 2 bis 7, wobei der Netzwerkknoten (700) dafür konfiguriert ist, mehrere gemeinsam genutzte Funkressourcen für die erneute Übertragung von Daten zuzuweisen, und wobei die Rückmeldesignalisierung mehrere Bits zur Anzeige der gemeinsam genutzten Funkressourcen umfasst.

9. Netzwerkknoten (700) nach einem der Ansprüche 2 bis 8, wobei der erste Übertragungsmodus auf einem der folgenden basiert:
orthogonaler Frequenzmultiplex-Vielfachzugriff (Orthogonal Frequency-Division Multiple Access, OFDMA) vorcodierungsbasierte Strahlformung und räumliches Multiplexing, und wobei der zweite Übertragungsmodus auf einem der folgenden basiert:
Codemultiplex-Vielfachzugriff (Code Division Multiple Access, CDMA), Raummultiplex-Vielfachzugriff (Space Division Multiple Access, SDMA), nicht-orthogonaler Mehrfachzugriff (Non-Orthogonal Multiple Access, NOMA), Sendediversität und Diversitätszuweisung von Funkressourcen.

10. Verfahren, das von einer drahtlosen Vorrichtung (502, 802) durchgeführt wird, wenn sie von einem Netzwerkknoten (500, 800) in einem Funknetzwerk bedient wird, wobei eine Rückmeldesignalisierung verwendet wird, um entweder eine Bestätigung, ACK, oder eine Nichtbestätigung, NACK, des korrekten Empfangs von Daten anzuzeigen, die durch die drahtlose Vorrichtung übertragen werden, wobei das Verfahren Folgendes umfasst:

- Erhalten (600), bevor eine Übertragung von Daten an den Netzwerkknoten (500, 800) durchgeführt wird, von Informationen über eine gemeinsam genutzte Funkressource, die für eine erneute Übertragung der Daten zu verwenden ist, falls die Rückmeldesignalisierung für die Übertragung von Daten eine NACK anzeigt, wobei die gemeinsam genutzte Funkressource einer Gruppe von drahtlosen Vorrichtungen zugewiesen ist, die die drahtlose Vorrichtung (502, 802) umfasst,
- Durchführen (602) der Übertragung von Daten an den Netzwerkknoten (500, 800),
- Empfangen (604) einer NACK für die Übertragung von Daten von dem Netzwerkknoten (500, 800) als die Rückmeldesignalisierung,
- Durchführen (606) einer erneuten Übertragung der Daten auf der gemeinsamen Funkressource an den Netzknoten (500, 800), und
- Erhalten von Informationen, die anzeigen, dass ein erster Übertragungsmodus für die Übertragung der Daten verwendet werden soll und dass ein zweiter Übertragungsmodus für die erneute Übertragung der Daten auf der gemeinsam genutzten Funkressource verwendet werden soll, wobei der zweite Übertragungsmodus weniger störungsfest ist als der erste Übertragungsmodus, und um die Übertragung der Daten unter Verwendung des ersten Übertragungsmodus und die erneute Übertragung der Daten unter Verwendung des zweiten Übertragungsmodus durchzuführen.

11. Drahtlose Vorrichtung (802), die von einem Netzwerkknoten (800) für ein Funknetzwerk bedient werden kann, wobei eine Rückmeldesignalisierung verwendet wird, um entweder eine Bestätigung, ACK, oder eine Nichtbestätigung, NACK, des korrekten Empfangs von Daten anzuzeigen, die durch die drahtlose Vorrichtung übertragen werden, wobei die drahtlose Vorrichtung (802) für Folgendes konfiguriert ist:

- Erhalten, bevor eine Übertragung von Daten an den Netzwerkknoten (800) durchgeführt wird, von Informationen über eine gemeinsam genutzte Funkressource, die für eine erneute Übertragung der Daten zu verwenden ist, falls die Rückmeldesignalisierung für die Übertragung von Daten eine NACK anzeigt, wobei die gemeinsam genutzte Funkressource einer Gruppe von drahtlosen Vorrichtungen zugewiesen ist, die die drahtlose Vorrichtung (802) umfasst,
- Durchführen der Übertragung von Daten an den Netzwerkknoten (800),
- Empfangen einer NACK für die Übertragung von Daten von dem Netzwerkknoten (800) als die Rückmeldesignalisierung und
- Durchführen einer erneuten Übertragung der Daten auf der gemeinsamen Funkressource an den Netzknoten (800),

wobei die drahtlose Vorrichtung (802) ferner dafür konfiguriert ist, Informationen zu erhalten, die anzeigen, dass ein erster Übertragungsmodus für die Übertragung der Daten verwendet werden soll und dass ein zweiter Übertragungsmodus für die erneute Übertragung der Daten auf der gemeinsam genutzten Funkressource verwendet werden soll, wobei der zweite Übertragungsmodus weniger störungsfest ist als der erste Übertragungsmodus, und die Übertragung der Daten unter Verwendung des ersten Übertragungsmodus durchzuführen und die erneute Übertragung der Daten unter Verwendung des zweiten Übertragungsmodus durchzuführen.

12. Drahtlose Vorrichtung (802) nach Anspruch 11, wobei die Rückmeldesignalisierung eine Prioritätsstufe für jede drahtlose Vorrichtung in der Gruppe umfasst, und die drahtlose Vorrichtung (802) dafür konfiguriert ist, die erneute Übertragung der Daten auf der gemeinsam genutzten Funkressource in Abhängigkeit von der Prioritätsstufe für die drahtlose Vorrichtung (802) im Verhältnis zu den Prioritätsstufen anderer drahtloser Vorrichtungen in der Gruppe durchzuführen.

13. Drahtlose Vorrichtung (802) nach Anspruch 11, wobei die drahtlose Vorrichtung (802) dafür konfiguriert ist, die erneute Übertragung der Daten auf der gemeinsamen Funkressource durchzuführen, wenn die drahtlose Vorrichtung (802) eine Prioritätsstufe hat, die höher ist als die Prioritätsstufe anderer drahtloser Vorrichtungen in der Gruppe, für die die Rückmeldesignalisierung eine NACK anzeigt, wobei die Prioritätsebenen anzeigen, dass eine drahtlose Vorrichtung, die eine höhere Priorität als eine andere drahtlose Vorrichtung hat, die gemeinsame Funkressource für die erneute Übertragung verwenden kann, während die drahtlose Vorrichtung, die eine niedrigere Priorität hat, die gemeinsam genutzte Funkressource nur dann für eine erneute Übertragung verwenden kann, wenn die gemeinsam genutzte Funkressource nicht von der drahtlosen Vorrichtung mit der höheren Priorität verwendet wird.

**14.** Drahtlose Vorrichtung (802) nach einem der Ansprüche 11 bis 13, wobei die erneute Übertragung von Daten auf der gemeinsam genutzten Funkressource konkurrenzbasiert ist.

**Revendications**

**1.** Procédé réalisé par un nœud de réseau (500, 700) desservant des dispositifs sans fil dans un réseau radio où une signalisation de rétroaction est employée pour indiquer soit un accusé de réception, ACK, soit un accusé de non-réception, NACK, de réception correcte de données transmises par les dispositifs sans fil, le procédé comprenant :

- l'attribution (302), avant la réception d'un ensemble de transmissions concomitantes de données en provenance d'un groupe de dispositifs sans fil (502, 702) desservis par le nœud de réseau (500, 700), d'une ressource radio partagée au groupe de dispositifs sans fil (502, 702) à utiliser pour une retransmission au cas où la signalisation de rétroaction pour au moins une transmission de données de l'ensemble de transmissions concomitantes de données indique un NACK,
- la réception (306) de l'ensemble de transmissions concomitantes de données en provenance du groupe de dispositifs sans fil (502, 702) dans lequel un sous-ensemble des transmissions concomitantes de données n'est pas reçu correctement,
- la transmission (308), en tant que dite signalisation de rétroaction, d'un NACK aux dispositifs sans fil dans le groupe de dispositifs sans fil qui ont transmis le sous-ensemble qui n'a pas été reçu correctement, et
- la réception (310), sur la ressource radio partagée, d'une retransmission d'au moins l'une des transmissions concomitantes de données dans le sous-ensemble qui n'a pas été reçu correctement en provenance d'au moins un dispositif sans fil auquel ledit NACK a été transmis,

dans lequel le nœud de réseau (700) signale aux dispositifs sans fil (702) dans le groupe qu'un premier mode de transmission devra être utilisé pour l'ensemble de transmissions concomitantes de données, et qu'un second mode de transmission devra être utilisé pour la retransmission sur la ressource radio partagée, le second mode de transmission étant moins résistant à l'interférence que le premier mode de transmission.

**2.** Nœud de réseau (700), agencé pour desservir des dispositifs sans fil pour un réseau radio où une signalisation de rétroaction est employée pour indiquer soit un accusé de réception, ACK, soit un accusé de non-réception, NACK, de réception correcte de données transmises par les dispositifs sans fil, dans lequel le nœud de réseau (700) est configuré pour :

- attribuer, avant la réception d'un ensemble de transmissions concomitantes de données en provenance d'un groupe de dispositifs sans fil (702) desservis par le nœud de réseau (700), une ressource radio partagée au groupe de dispositifs sans fil (702) à utiliser pour une retransmission au cas où la signalisation de rétroaction pour au moins une transmission de données de l'ensemble de transmissions concomitantes de données indique un NACK,
- recevoir l'ensemble de transmissions concomitantes de données en provenance du groupe de dispositifs sans fil (702) dans lequel un sous-ensemble des transmissions concomitantes de données n'est pas reçu correctement,
- transmettre, en tant que dite signalisation de rétroaction, un NACK aux dispositifs sans fil dans le groupe de dispositifs sans fil qui ont transmis le sous-ensemble qui n'a pas été reçu correctement, et
- recevoir, sur la ressource radio partagée, une retransmission d'au moins l'une des transmissions concomitantes de données dans le sous-ensemble qui n'a pas été reçu correctement en provenance d'au moins un dispositif sans fil auquel ledit NACK a été transmis,

dans lequel le nœud de réseau (700) est en outre configuré pour signaler aux dispositifs sans fil (702) dans le groupe qu'un premier mode de transmission devra être utilisé pour l'ensemble de transmissions concomitantes de données, et qu'un second mode de transmission devra être utilisé pour la retransmission sur la ressource radio partagée, le second mode de transmission étant moins résistant à l'interférence que le premier mode de transmission.

**3.** Nœud de réseau (700) selon la revendication 2, dans lequel le nœud de réseau (700) est configuré pour sélectionner le groupe de dispositifs sans fil (702) sur la base d'un taux d'erreur prévu pour une transmission et/ou une retransmission de données en provenance des dispositifs sans fil (702) respectifs.

**4.** Nœud de réseau (700) selon la revendication 2 ou 3, dans lequel le nœud de réseau (700) est configuré pour sélectionner le groupe de dispositifs sans fil (702) sur la base d'un taux d'erreur prévu pour la signalisation de rétroaction aux dispositifs sans fil (702) respectifs.

**5.** Nœud de réseau (700) selon l'une quelconque des revendications 2 à 4, le nœud de réseau (700) est configuré pour attribuer, avant la réception de transmissions initiales de données pour lesquelles une ressource radio unique est attribuée à chaque dispositif sans fil individuel dans le groupe, une ressource radio supplémentaire pour l'ensemble de transmissions concomitantes de données,
dans lequel une quantité plus petite de ressources est attribuée en tant que ressource radio partagée pour la retransmission en comparaison avec une quantité de ressources attribuée en tant que ressource radio supplémentaire.

**6.** Nœud de réseau (700) selon l'une quelconque des revendications 2 à 5, dans lequel la retransmission de données reçue sur la ressource radio partagée est basée sur la contention.

**7.** Nœud de réseau (700) selon l'une quelconque des revendications 2 à 5, dans lequel le nœud de réseau (700) est configuré pour radiodiffuser la signalisation de rétroaction et un niveau de priorité pour chaque dispositif sans fil (702) dans le groupe, de sorte que les dispositifs sans fil (702) dans le groupe pour lesquels la signalisation de rétroaction indique un NACK soient activés pour réaliser une retransmission des données sur la ressource radio partagée en fonction des niveaux de priorité, dans lequel les niveaux de priorité indiquent qu'un dispositif sans fil ayant une priorité plus élevée qu'un autre dispositif sans fil peut utiliser la ressource radio partagée pour une retransmission, tandis que le dispositif sans fil ayant une priorité plus basse peut utiliser la ressource radio partagée pour une retransmission uniquement si la ressource radio partagée n'est pas utilisée par le dispositif sans fil ayant la priorité plus élevée.

**8.** Nœud de réseau (700) selon l'une quelconque des revendications 2 à 7, dans lequel le nœud de réseau (700) est configuré pour attribuer de multiples ressources radio partagées pour une retransmission de données et dans lequel la signalisation de rétroaction comprend de multiples bits pour indiquer les ressources radio partagées.

**9.** Nœud de réseau (700) selon l'une quelconque des revendications 2 à 8, dans lequel le premier mode de transmission est basé sur l'un parmi :
accès multiple par répartition orthogonale de la fréquence, OFDMA, formation de faisceau basée sur précodage, et multiplexage spatial, et dans lequel le second mode de transmission est basé sur l'un parmi :
accès multiple par répartition en code CDMA, accès multiple par répartition spatiale SDMA, accès multiple non orthogonal NOMA, diversité à l'émission, et allocation diversifiée de ressources radio.

**10.** Procédé réalisé par un dispositif sans fil (502, 802) lorsqu'il est desservi par un nœud de réseau (500, 800) dans un réseau radio où une signalisation de rétroaction est employée pour indiquer soit un accusé de réception, ACK, soit un accusé de non-réception, NACK, de réception correcte de données transmises par le dispositif sans fil, le procédé comprenant :

- l'obtention (600), avant la réalisation d'une transmission de données au nœud de réseau (500, 800), d'informations concernant une ressource radio partagée à utiliser pour une retransmission des données au cas où la signalisation de rétroaction la transmission de données indique un NACK, la ressource radio partagée étant attribuée à un groupe de dispositifs sans fil comprenant le dispositif sans fil (502, 802),
- la réalisation (602) de la transmission de données au nœud de réseau (500, 800),
- la réception (604) en provenance du nœud de réseau (500, 800), en tant que dite signalisation de rétroaction, d'un NACK pour la transmission de données,
- la réalisation (606) d'une retransmission des données sur la ressource radio partagée au nœud de réseau (500, 800), et
- l'obtention d'informations indiquant qu'un premier mode de transmission devra être utilisé pour ladite transmission des données et qu'un second mode de transmission devra être utilisé pour la retransmission des données sur la ressource radio partagée, le second mode de transmission étant moins résistant à l'interférence que le premier mode de transmission, et de réaliser la transmission des données à l'aide du premier mode de transmission et de réaliser la retransmission des données à l'aide du second mode de transmission.

**11.** Dispositif sans fil (802) capable d'être desservi par un nœud de réseau (800) dans un réseau radio où une signalisation de rétroaction est employée pour indiquer soit un accusé de réception, ACK, soit un accusé de non-réception, NACK, de réception correcte de données transmises par le dispositif sans fil, dans lequel le dispositif sans fil (802) est configuré pour :

- obtenir, avant la réalisation d'une transmission de données au nœud de réseau (800), des informations concernant une ressource radio partagée à utiliser pour une retransmission des données au cas où la signalisation de rétroaction la transmission de données indique un NACK, la ressource radio partagée étant attribuée à un groupe de dispositifs sans fil comprenant le dispositif sans fil (802),
- réaliser la transmission de données au nœud de réseau (800),
- recevoir en provenance du nœud de réseau (800), en tant que dite signalisation de rétroaction, un NACK pour la transmission de données, et
- réaliser une retransmission des données sur la ressource radio partagée au nœud de réseau (800),

dans lequel le dispositif sans fil (802) est en outre configuré pour obtenir des informations indiquant qu'un premier mode de transmission devra être utilisé pour ladite transmission des données et qu'un second mode de transmission devra être utilisé pour la retransmission des données sur la ressource radio partagée, le second mode de transmission étant moins résistant à l'interférence que le premier mode de transmission, et de réaliser la transmission des données à l'aide du premier mode de transmission et de réaliser la retransmission des données à l'aide du second mode de transmission.

12. Dispositif sans fil (802) selon la revendication 11, dans lequel ladite signalisation de rétroaction comprend un niveau de priorité pour chaque dispositif sans fil dans le groupe, et le dispositif sans fil (802) est configuré pour réaliser ladite retransmission des données sur la ressource radio partagée en fonction du niveau de priorité pour le dispositif sans fil (802) en rapport avec les niveaux de priorité d'autres dispositifs sans fil dans le groupe.

13. Dispositif sans fil (802) selon la revendication 11, dans lequel le dispositif sans fil (802) est configuré pour réaliser ladite retransmission des données sur la ressource radio partagée lorsque le dispositif sans fil (802) a un niveau de priorité plus élevé que le niveau de priorité d'autres dispositifs sans fil dans le groupe pour lequel la signalisation de rétroaction indique un NACK, dans lequel les niveaux de priorité indiquent qu'un dispositif sans fil ayant une priorité plus élevée qu'un autre dispositif sans fil peut utiliser la ressource radio partagée pour une retransmission, tandis que le dispositif sans fil ayant une priorité plus basse peut utiliser la ressource radio partagée pour une retransmission uniquement si la ressource radio partagée n'est pas utilisée par le dispositif sans fil ayant la priorité plus élevée.

14. Dispositif sans fil (802) selon l'une quelconque des revendications 11 à 13, dans lequel la retransmission des données reçues sur la ressource radio partagée est basée sur la contention.

Fig. 1 (prior art)

Fig. 2 (prior art)

300 | Select group of wireless devices based on expected error rate

302 | Assign shared radio resource to group for retransmission

304 | Assign further radio resource for concurrent transmissions of data from group

306 | Receive concurrent transmissions of data from group

308 | Transmit NACK to wireless devices having transmitted subset that was not received correctly

310 | Receive retransmission(s) of not correctly received data on shared radio resource

Fig. 3

400 — Determine expected data error rate for (next) device

402 — Expected error rate < threshold?

Yes

404 — Include device in group

No

406 — All served devices evaluated?

No

Yes

408 — Assign priority levels to devices in group based on expected error rates

410 — Broadcast feedback signalling and priority levels

Fig. 4

Fig. 5

Even constellation | Uneven constellation

ACK

NACK states

Fig. 5A

600

Obtain information on shared radio resource for retransmission of data

602

Perform transmission of data to network node

604

Receive NACK as feedback signalling from network node

606

Perform retransmission of data on shared radio resource

Fig. 6

700

Network Node

P

Processor

Assigning Module — 700A

Receiving Module — 700B

Transmitting Module — 700C

M

Memory

C

Communication Circuit

702

Fig. 7

Fig. 8

Error rate vs $E_b / N_0$

Fig. 9

Resources vs $E_b / N_0$

Fig. 10

Fig. 11

Fig. 12

31

**EP 3 453 209 B1**

**Patent documents cited in the description**

- US 20100284364 A1